(19) Europäisches Patentamt / European Patent Office / Office européen des brevets

(11) **EP 3 407 047 A1**

(12) **EUROPEAN PATENT APPLICATION**

(43) Date of publication:
**28.11.2018 Bulletin 2018/48**

(51) Int Cl.:
**G01L 5/22** *(2006.01)*          **B62K 23/08** *(2006.01)*
**G01G 3/14** *(2006.01)*          **G01L 1/22** *(2006.01)*
**G05D 1/08** *(2006.01)*          **B62K 11/00** *(2006.01)*

(21) Application number: **18173077.1**

(22) Date of filing: **18.05.2018**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **22.05.2017   US 201715601743**

(71) Applicant: **Radical Transport, LLC
Dallas, TX 75220 (US)**

(72) Inventors:
• **CUBAN, Mark**
  **Dallas, TX Texas 75220 (US)**
• **FRAGNITO, Nicholas**
  **Dallas, TX Texas 75204 (US)**
• **WILLIAMS Jr., Evan**
  **Zionsville, IN Indiana 46077 (US)**

(74) Representative: **Conroy, John
Fish & Richardson P.C.
Highlight Business Towers
Mies-van-der-Rohe-Straße 8
80807 München (DE)**

(54) **FORCE SENSING FOR A RIDABLE VEHICLE**

(57)    A two-wheeled vehicle that can be used for personal transportation is described. In some embodiments, the vehicle includes first and second wheels that define a common longitudinal axis of rotation, a rigid platform extending along the common longitudinal axis between the first and second wheels that defines a left foot portion and a right foot portion, a first strain sensor affixed to the rigid platform, and a control system configured to output a steering control signal based on a sensor signal received from the first strain sensor.

FIG. 1

EP 3 407 047 A1

## Description

## TECHNICAL FIELD

This document describes personal transportation devices, systems, and methods, and in some embodiments, two-wheeled, personal transportation vehicles having rider force sensing features.

## BACKGROUND

Powered vehicles for personal transportation are widely known. Wheeled vehicles have been proposed that deliver power to move a vehicle and user. Some devices deliver torque to the wheels based on input provided by a user. For example, speed and direction of some wheeled vehicles may be controlled based on the distribution of a user's weight, while a controller system controls delivery of power to the wheels to stabilize the vehicle. Many such vehicles include platforms for each foot of a user that are independently articulated to generate control inputs.

## SUMMARY

In general, this document describes devices, systems, and methods for personal transportation. Exemplary personal transportation vehicles may deliver power to one or more wheels to drive the vehicle while carrying one or more riders. Power delivery to the wheels can be directed based on a sensor configured to detect an amount of torsion being applied to a deck of the vehicle and an optional electrical offset applied to the sensor.

Some exemplary embodiments described herein provide a two-wheeled electric vehicle including first and second wheels that define a common longitudinal axis of rotation, a rigid platform extending along the common longitudinal axis between the first and second wheels, and including an upper deck that defines a left foot portion and a right foot portion, a first strain sensor affixed to the rigid platform, the first strain sensor intersected by a mid-sagittal reference plane that divides the rigid platform into left and right halves, and a control system configured to output a steering control signal based on a sensor signal received from the first strain sensor.

Implementations may include any, all, or none of the following features. The first strain sensor may include a bridge circuit including a first strain gauge configured to deform along a primary sensing axis oriented at a 45° angle relative to the common longitudinal axis, the output of the bridge circuit configured to vary as the first strain gauge is deformed. The first strain gauge may be configured to change resistance when deformed along the primary sensing axis. The first strain sensor may include a second strain gauge, and the first strain sensor is configured as a one-half Wheatstone bridge circuit. The first strain sensor may include first, second, third, and fourth strain gauges, and the first strain sensor may be configured as a full Wheatstone bridge circuit. The vehicle may include a second strain sensor affixed to the rigid platform, the second strain sensor intersected by the mid-sagittal reference plane, wherein the control system may be further configured to output a rider detection signal based on a sensor signal received from the second strain sensor. The control system may be further configured to output the steering control signal based on the control signal and the rider detection signal. The second strain sensor may be oriented 45° relative to the first strain sensor. The vehicle may include an offset generator circuit having a variable resistor in electrical communication with the bridge circuit, the offset generator circuit configured to modify the output of the bridge circuit. The offset generator circuit may be configured to add a predetermined positive value to the output of the bridge circuit such that the output of the bridge circuit is the predetermined positive value when no strain is detected by the first strain sensor. The first strain sensor may be affixed to the rigid platform such that torsion of the rigid platform causes the sensor signal to vary in response to torsion of the rigid platform. The first strain sensor may be the only sensor configured to detect a left or right steering input from the user. The upper deck may be a unitary upper deck such that the left foot portion is non-pivotable relative to the right foot portion.

Some embodiments described herein provide a method of propulsion including detecting a first torque applied to a rigid platform of a two-wheeled vehicle by a first strain sensor affixed to the rigid platform, the two-wheeled vehicle including: first and second wheels that define a common longitudinal axis of rotation, and a control system, wherein the first strain sensor is intersected by a mid-sagittal reference plane that divides the rigid platform into left and right halves, receiving a first sensor signal from the first strain sensor by the control system, the first sensor signal representative of deformation of the strain sensor based on the first torque, determining by the control system a steering control signal based on the first sensor signal, and actuating a first electric motor configured to drive the first wheel based on the steering control signal.

Implementations may include any, all, or none of the following features. The first strain sensor may include a first strain gauge configured as a first portion of a Wheatstone bridge, a resistance of the first strain gauge configured to vary when the first strain gauge is deformed along a first primary sensing axis. The first strain sensor may be affixed to the rigid platform such that the first primary sensing axis is oriented at a 45° angle relative to the common longitudinal axis, wherein the first torque compresses or strains the rigid platform along the first primary sensing axis. The strain sensor may include a second strain gauge configured as a second portion of the Wheatstone bridge, a resistance of the second strain gauge configured to vary when the second strain gauge is deformed along a second primary sensing axis, the second primary sensing axis oriented at a 90° angle relative to the first primary sensing axis. The first control signal may be proportional to the first torque, and the first electric motor may be actuated to drive the first wheel at a speed that is proportional to the first torque. Detecting a first torque may include detecting a twisting of a left foot portion the rigid platform relative to a right foot portion of the rigid platform.

Some embodiments described herein provide a two-wheeled electric vehicle, including a rigid platform having a major upper surface defining first and second foot portions, a steering sensor comprising a first strain gauge affixed to the rigid platform, and a rider detection sensor comprising a second strain gauge affixed to the rigid platform, wherein the steering sensor and the rider detection sensor are intersected by a mid-sagittal reference plane that divides the rigid platform into left and right halves.

The systems and techniques described here may provide one or more of the following advantages. First, some embodiments of an exemplary two-wheeled vehicle allow a user to steer the vehicle by applying a torsion to a rigid deck of the vehicle (e.g., without requiring additional complexity that may be associated with an articulating joint between separate sections for each foot).

Second, a force applied to the rigid deck (e.g. a torsional force) can be sensed by a single sensor in contact with the rigid deck. For example, a single sensor may be configured to sense torsion in multiple directions such that the single sensor may be associated with steering commands in both left and right directions.

Third, the use of a rigid deck may improve the reliability, robustness, durability, and/or usability of the wheeled vehicle. For example, a rigid deck may facilitate positioning of sensors at an enclosed location protected from rain, debris, excessive force, etc. In some embodiments, sensors may be of a type having few or zero moving parts that could result in failure by moving out of an operational position, for example. Alternatively or additionally, a rigid deck construction can facilitate use of a single steering sensor.

Fourth, the presence of only a single steering sensor can reduce the complexity, weight, number of points of malfunction, and/or cost of the wheeled vehicle compared to other designs. For example, a single or dual channel instrument amplifier may be used, reducing the cost and complexity associated with additional amplifiers that may otherwise be required if additional steering sensors were included to receive left and right steering inputs.

Fifth, some embodiments of a wheeled vehicle having a rigid deck may facilitate an ergonomic design. For example, some embodiments may facilitate ergonomic handling and carrying of the vehicle between periods of operation (e.g. such as by a centrally-positioned carrying handle constructed so that the vehicle may be carried in a substantially balanced orientation).

The details of one or more implementations are set forth in the accompanying drawings and the description below. Other features and advantages will be apparent from the description and drawings, and from the claims.

**DESCRIPTION OF DRAWINGS**

FIG. 1 is a perspective view of an exemplary vehicle.
FIG. 2 is an exemplary vehicle in operation supporting a standing user.
FIG. 3 is a front view of the exemplary vehicle of FIG. 1.
FIG. 4 is a top view of the exemplary vehicle of FIG. 1.
FIG. 5 is the exemplary vehicle of FIG. 1 carried by a user via a carrying handle.
FIG. 6 is an exploded view of the exemplary vehicle of FIG. 1.
FIG. 7 is a cross-sectional view of the exemplary vehicle of FIG. 1 along a longitudinal axis of rotation of first and second wheels.
FIG. 8 is a partial bottom view of the exemplary vehicle of FIG. 1, including components of an exemplary control system.
FIG. 9 is a schematic diagram of an exemplary sensor circuit.
FIG. 10 is a top view of an exemplary strain sensor.
FIG. 11 is a top view of the orientation of the exemplary strain sensor of FIG. 10 relative to the exemplary vehicle of FIG. 1.
FIG. 12 is a top view of the orientation of another exemplary strain sensor of FIG. 10 relative to the exemplary vehicle of FIG. 1.
FIG. 13 is an exemplary control system circuit that may be included in the exemplary vehicle of FIG. 1.
FIG. 14 is a flow diagram of an example process that may be used to control a vehicle, such as the exemplary vehicle of FIG. 1.

**DETAILED DESCRIPTION**

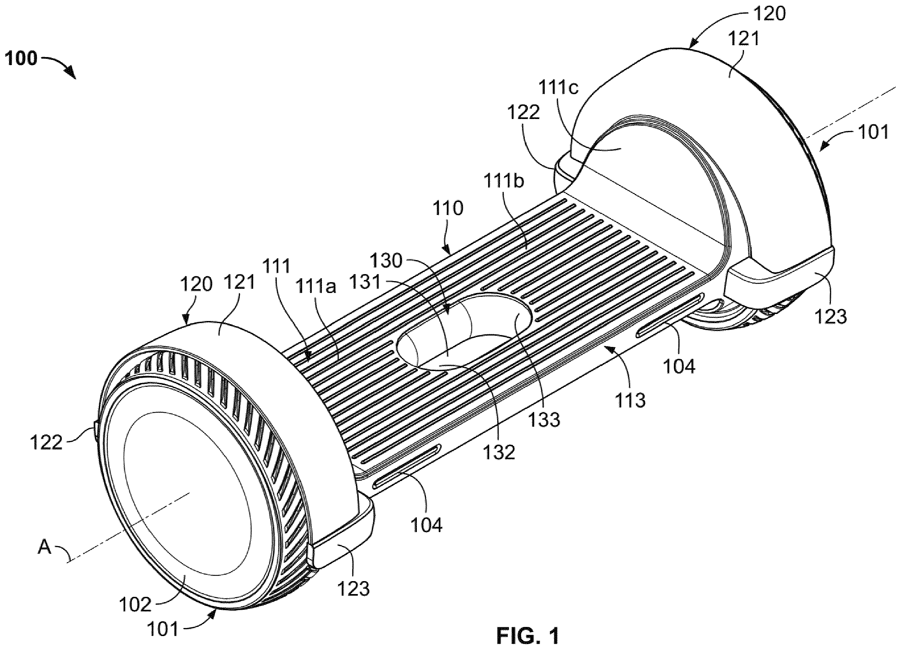

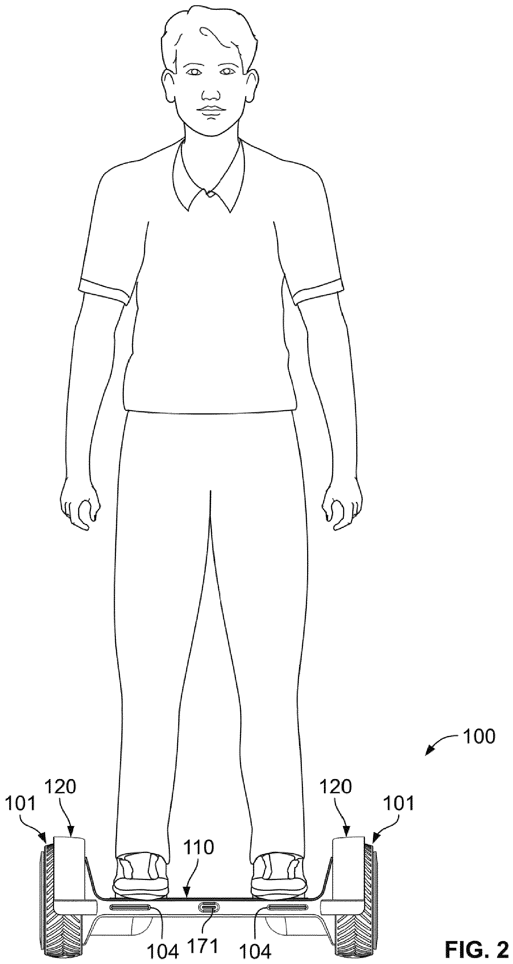

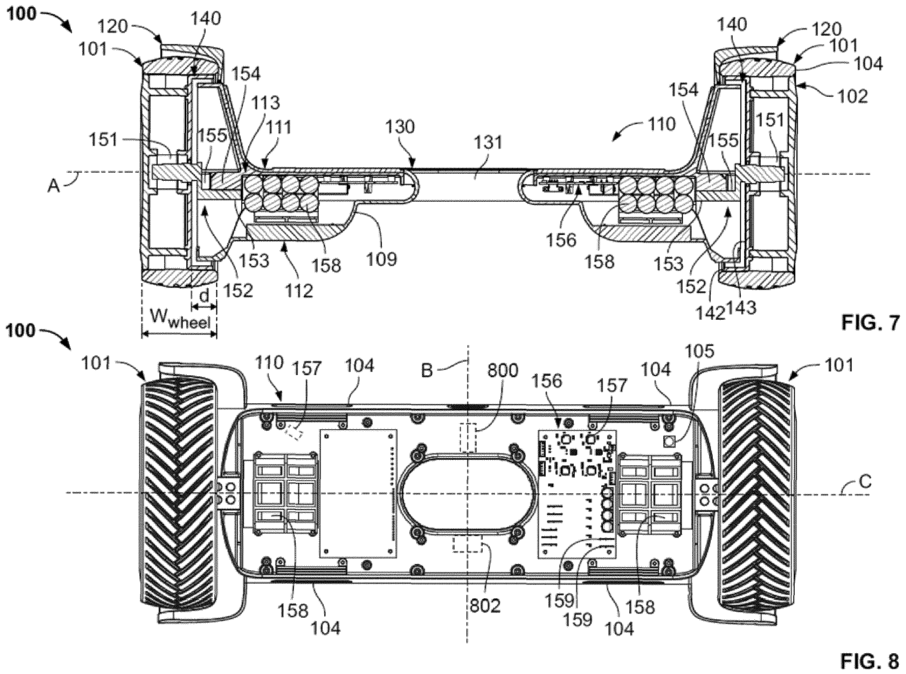

Referring to FIGS. 1-4, an exemplary two-wheeled vehicle 100 is shown, including first and second wheels 101, a rigid platform 110 between first and second wheels 101 and a fender system 120. A drive system 150 (FIG. 7) generates and controls delivery of power to first and second wheels 101 to drive vehicle 100. In operation, rigid platform 110 may support a user while one or more actuators, such as electric motors, deliver power to first and second wheels 101 to transport vehicle 100 and the user.

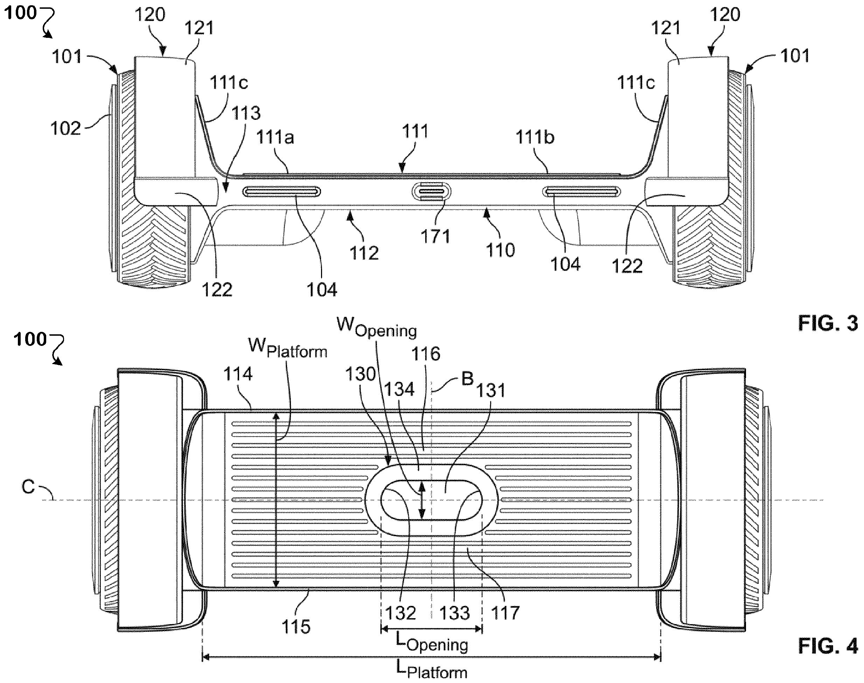

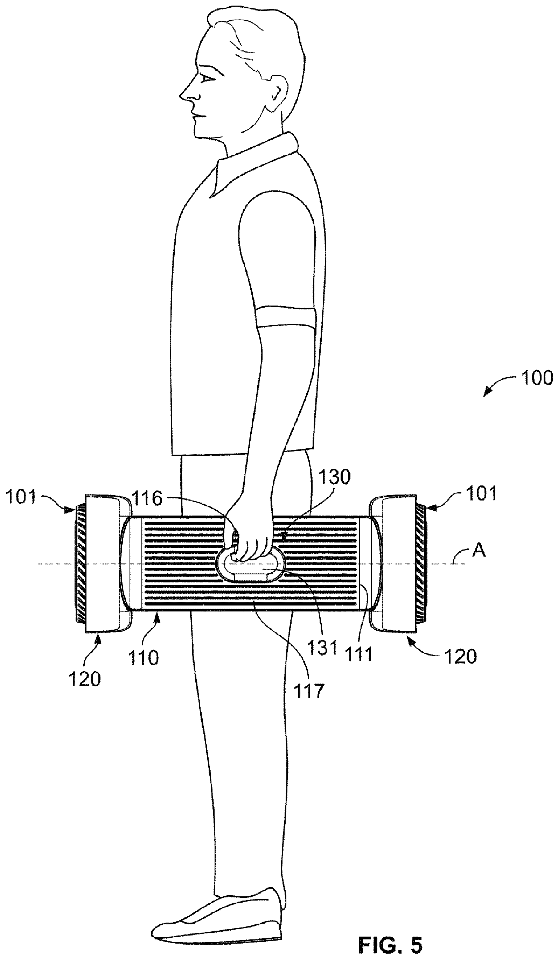

Rigid platform 110 is mounted, directly or indirectly, to first and second wheels 101 and extends at least partially between first and second wheels 101. Rigid platform 110 may include an upper deck 111 (e.g. that a user may stand on while riding vehicle 100), a lower deck 112 (FIG. 3), and frame 113. For example, upper deck 111 includes a first, or left, foot portion 111a where a user may position their left foot, and a second, or right, foot portion 111b where a user may position their right foot. First foot portion 111a is proximate a first wheel 101 and a first actuator 151 (FIG. 5) and right foot portion 111b is proximate a second wheel 101 and a second actuator 151.

Upper deck 111 may include curved ends 111c that curve upward from first and second foot portions 111a, 111b. In an exemplary embodiment, curved ends 111c and first and second foot portions 111a, 111b form a unitary upper deck 111. Curved ends 111c may provide a barrier between a user's feet, wheels 101, and/or one or more components housed within vehicle 100, while facilitating a streamlined aesthetic appearance of vehicle 100.

In an exemplary embodiment, upper deck 111 is substantially rigid such that first and second foot portions 111a, 111b are in fixed relation to each other. For example, first foot portion 111a may be connected to the second foot portion 111b, or supported by a common component, directly or indirectly, such that first and second foot portions 111a, 111b are substantially constrained from independent movement during operation of vehicle 100. First and second foot portions 111a, 111b may be constrained from independent rotation that would otherwise allow first and second foot portions 111a, 111b to articulate to different, discrete orientations relative to one another. In an exemplary embodiment, first and second foot portions 111a, 111b are provided at least in part by unitary upper deck 111, which spans a center of vehicle 100 and extends substantially from an end of rigid platform 110 proximate the first wheel 101 to an opposite end of rigid platform 110 proximate the second wheel 101. Unitary upper deck 111 may be supported by a unitary frame 113 that spans a center of vehicle 100 and spans first and second foot portions 111a, 111b.

Vehicle 100 includes a fender system 120 having one or more components that at least partially surround first and second wheels 101, rigid platform 110, and/or other components of vehicle 100. Fender system 120 may protect vehicle 100 from impact and interference with objects in the external environment by deflecting and/or dissipating the force of an impact. For example, fender system 120 can be constructed as the outermost portion of vehicle 100 (e.g. at particular locations of a front and rear of vehicle 100) such that, in the event of an impact with an object during operation, fender system 120 makes initial contact with the object. Fender system 120 may absorb or dissipate the force of impact to reduce the occurrence or severity of damage to vehicle 100.

Fender system 120 may include first and second fenders 121 that at least partially surround first and second wheels 101, respectively. First and second fenders 121 may cover at least an inner, upper portion of each wheel 101, providing a barrier between wheels 101 and a user's feet and legs supported on rigid platform 110. Alternatively, or in addition, first and second fenders 121 may be positioned directly adjacent to rigid platform 110 to promote a continuous and streamlined visual appearance. Fender system 120 may include first and second front bumpers 122 and first and second rear bumpers 123. Front and rear bumpers 122, 123 may provide the outermost portion of fender system 120 at front and rear locations of vehicle 100 such that impact between an obstacle and vehicle 100 during operation may result in contact at a location of front or rear bumpers 122, 123.

In various exemplary embodiments, fender system 120 is configured to reduce damage or shock from an impact between vehicle 100 and an obstacle. Fender system 120, including fenders 121, front bumpers 122, and/or and rear bumpers 123 may be constructed of a durable and impact resistant material, and/or may have a geometry such that fender system 120 may flex or otherwise diffuse force over a relatively larger area. For example, fender system 120 may include components made from a resilient polymer material, steel, aluminum, magnesium, carbon fiber, combinations thereof, or other material suitable to absorb impact during operation of vehicle 100.

Vehicle 100 includes a carrying handle 130 that facilitates manual handling and manipulation of vehicle 100. In an exemplary embodiment, carrying handle 130 provides a location where a user may grasp vehicle 100 to lift vehicle 100 off the ground and manually carry vehicle 100. For example, a user may grasp carrying handle 130 to pick-up vehicle 100 from the ground and manually transport vehicle 100 between periods of operation when power is not delivered to the wheels, or to reposition vehicle 100.

Carrying handle 130 may be positioned generally centrally on rigid platform 110 such that at least a portion of carrying handle 130 is positioned forward of a longitudinal axis of rotation (A) extending through the axis of rotation of first and second wheels 101, and at least a portion of carrying handle 130 is positioned rearward of longitudinal axis of rotation (A). Alternatively, or in addition, carrying handle 130 may be positioned generally centrally between first and second wheels 101 such that at least a portion of carrying handle 130 is on a left half of vehicle 100 and at least a portion of carrying handle 130 is on a right half of vehicle 100.

Various features of vehicle 100 and carrying handle 130 may be further understood in view of two reference planes defined relative to vehicle 100 and shown in FIG. 4. A mid-sagittal reference plane (B) divides vehicle 100 into imaginary left and right halves and a mid-frontal reference plane (C) divides vehicle 100 into imaginary front and rear halves. In an exemplary embodiment, carrying handle 130 is positioned such that mid-sagittal reference plane (B) and mid-frontal reference plane (C) each intersect a portion of carrying handle 130. That is, carrying handle 130 may span each of mid-sagittal reference plane (B) and mid-frontal reference plane (C) such that a portions of carrying handle are present both to the left and to the right of mid-sagittal reference plane (B), and to the front and to the rear of mid-frontal reference plane (C).

Carrying handle 130 may include left and right portions 132, 133 (e.g. on each side of a mid-sagittal reference plane (B), or left and right halves of carrying handle 130 in embodiments in which carrying handle 130 is positioned symmetrically about mid-sagittal reference plane (B)), that are in fixed relation to one another. That is, rigid platform 110 may be constructed such that carrying handle 130 includes left and right portions 132, 133 that do not substantially rotate or otherwise move relative to each other during operation of vehicle 100, and do not substantially rotate or otherwise move relative to each other while vehicle 100 is handled by a user via carrying handle 130. Left and right portions may be defined by a unitary upper deck 111, unitary lower deck 112, and/or unitary frame 113 that span a center where mid-sagittal reference plane (B) extends through vehicle 100. Carrying handle 130 having left and right portions 132, 133 that are in fixed relation to each other facilitates carrying by providing a consistent grip, and reducing moving parts, joints, or seams that could be perceived by the user while carrying vehicle 100.

Carrying handle 130 may be defined at least in part by one or more surfaces of vehicle 100. In an exemplary embodiment, carrying handle 130 includes opening 131 defined at least partially through rigid platform 110. Opening 131 may extend entirely through rigid platform 110 such that the ground below vehicle 100 is visible through opening 131 from above vehicle 100 (e.g. by a user during operation of vehicle 100). Upper deck 111, lower deck 112, frame 113, and/or other components of rigid platform 110 may contribute sufficient structural support such that opening 131 can be used to carry vehicle 100. Alternatively, or in addition, carrying handle 131 may be provided by upper deck 111, lower deck 112, frame 113, or other portions of vehicle 100, and/or may include a separate component attached to vehicle 100.

Opening 131 of carrying handle 130 may have curved inner walls and/or chamfered edges that facilitate a comfortable grip substantially free of corners, movable parts, or sharp edges. For example, opening 131 is defined in part by inner surfaces 134 having an outwardly convex curvature that provides an ergonomic profile. In an exemplary embodiment, inner surfaces 134 are formed by a portion of lower deck 112 extending upwardly through frame 113 towards upper deck 111. Alternatively, or in addition, one or more surfaces of handle 130 may be textured, rubberized, and/or include ridges or indents to facilitate finger placement by a user.

Carrying handle 130, and particularly opening 131, may have a shape configured to receive a portion of a user's hand while carrying vehicle 100. In an exemplary embodiment, opening 131 has an oval shape including straight, elongate side portions and curved ends. Alternatively, or in addition, carrying handle 130 may exhibit one or more shapes including circular, elliptical, square, rectangular, other shapes, or combinations thereof, that facilitate handling by a user and/or facilitate balanced carrying of vehicle 100.

Carrying handle 130 exhibits a size suitable for carrying vehicle 100 without unduly affecting the structural integrity or stability of rigid platform 110. In an exemplary embodiment in which carrying handle 130 is at least partially formed as an opening through rigid platform 110, carrying handle 130 has a width ($w_{opening}$) measured across opening 131 in a direction perpendicular to longitudinal axis of rotation (A), and a length ($l_{opening}$) measured across opening 131 in a direction parallel to longitudinal axis of rotation (A). Rigid platform 110 has a width ($W_{platform}$) measured between front and rear edges 114, 115 in a direction perpendicular to the longitudinal axis of rotation, and a length ($L_{platform}$) measured between opposite ends 116, 117 of rigid platform 110 between first and second wheels 101. In various exemplary embodiments, width ($w_{opening}$) of carrying handle 130 is smaller than width ($W_{platform}$) of rigid platform 110, and width ($w_{opening}$) may be between about $0.1*(W_{platform})$ and $0.9*(W_{platform})$, $0.15*(W_{platform})$ and $0.6*(W_{platform})$, or about $0.25*(W_{platform})$. Length (1) of carrying handle 130 is smaller than length ($L_{platform}$) of rigid platform 110, and length (1) may be between about $0.1*(L_{platform})$ and $0.7*(L)$, $0.15*(L_{platform})$ and $0.4*(L_{platform})$, or about $0.2*(L_{platform})$. Such dimensions facilitate carrying of vehicle 100 without carrying handle 130 being so large as to be perceived to interfere with a user's feet during operation of vehicle 100 or unduly affecting the structural integrity or stability of rigid platform 110. In some exemplary embodiments, such dimensions provide first and second grippable portions 116, 117 of rigid platform 110. For example, a first grippable portion 116 is positioned between front edge 114 and opening 131 of carrying handle 130, and a second grippable portion 117 is positioned between rear edge 115 and opening 131 of carrying handle 130. Accordingly, a user may carry vehicle 100 by gripping either portion, and vehicle 100 may be carried in a configuration in which front edge 114 faces upwards away from the ground or in a configuration in which front edge 114 faces downwards towards the ground.

Referring to FIG. 5, carrying handle 130 may facilitate comfortable carrying of vehicle 100 by a user. For example, carrying handle 130 positioned centrally between wheels 101 may result in substantially even distribution of weight on each side of carrying handle 130 when vehicle 100 is carried via carrying handle 130, and may facilitate one-handed carrying of vehicle 100. A user can readily pick-up and carry vehicle 100 via carrying handle 130, and longitudinal axis of rotation (A) between first and second wheels 101 may remain substantially perpendicular to the force of gravity. Alternatively, or in addition, carrying handle 130 may provide a location of vehicle 100 that is above longitudinal axis of rotation (A) when vehicle 100 is carried by the user. For example, first grippable portion 116 may be positioned above longitudinal axis (A), and second grippable portion 117 may be positioned below longitudinal axis (A), when vehicle 100 is carried by a user via first grippable portion 116 of carrying handle 130. Vehicle 100 may be carried via carrying handle 130 such that an exposed surface of upper deck 111 is oriented substantially perpendicular to the ground. Longitudinal axis of rotation (A) may extend below the location where a user grips carrying handle 130, for example through opening 131 below the user's hand. In this way, vehicle 100 may have a center of gravity that is below the location where the user grips carrying handle 130 to carry vehicle 100. Carrying handle 130 thus may be gripped to hold vehicle 100 in an orientation in which vehicle 100 remains stable in the user's hand, and require little balance or support by the user to prevent vehicle 100 from twisting out of the user's hand.

In some exemplary embodiments, carrying handle 130 may include a centrally located grippable arm or bar with openings defined forward and reward of the arm to accommodate a user's hand and facilitate gripping of the arm. An arm may be aligned substantially parallel with the mid-frontal reference plane (B) extending across opening 131 and longitudinal axis of rotation (A). For example, the arm may separate opening 131 into front and rear openings through rigid platform 110 that are positioned forward and reward of the arm and/or mid-frontal reference plane (B), respectively, and that accommodate a user's hand when the user grips the arm to carry vehicle 100.

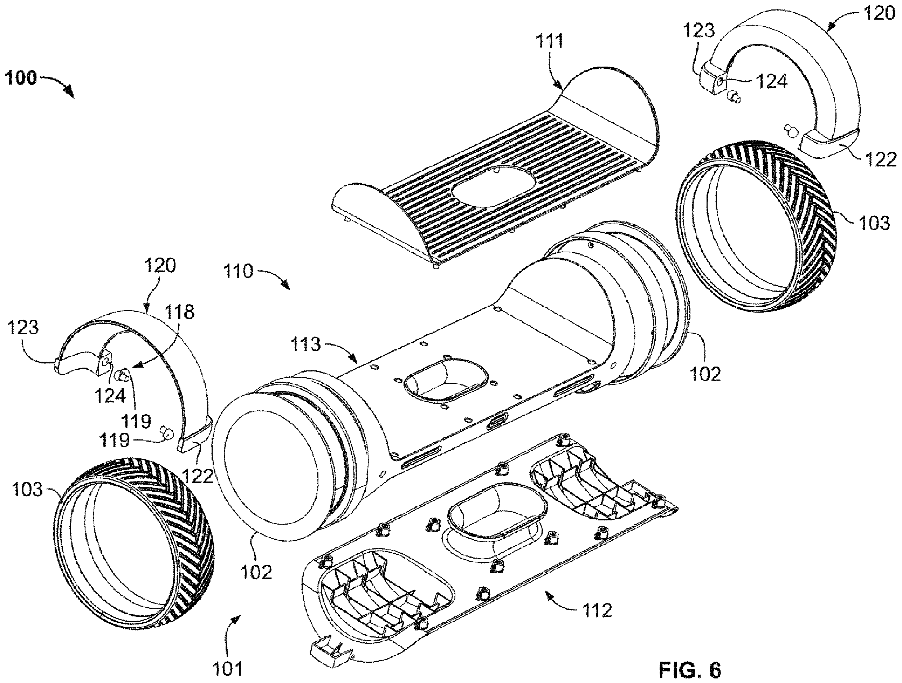

Referring to FIG. 6, an exploded perspective view of vehicle 100 is shown. Fender system 120, including fenders 121 and bumpers 122, 123, may be removably assembled with each other, rigid platform 110, and/or other components of vehicle 100 (e.g. and may be removed and reassembled without damage to fender system 120 and other components of vehicle 100). For example, fender system 120 may be configured to separate into multiple components when subjected to an impact of a predetermined threshold such that the force of an impact is at least partially diffused. A force sustained during an impact between vehicle 100 and an object may be at least partially diffused by redirecting the force of impact towards causing components of fender system 120 to separate from one another and/or vehicle 100. Damage to fender system 120 and/or other components of vehicle 100 may thus be reduced, and the separated components may be readily reassembled or replaced with substitute components.

Components of fender system 120 may be releasably coupled with rigid platform 110 by frictional engagement. In an exemplary embodiment, vehicle 100 includes ball-and-socket connections that provide frictional engagement between fender system 120 and rigid platform 110. For example, ball-end 119 of a ball screw 118 may extend from rigid platform 110, and a socket 124 defined by fender system 120 may frictionally receive ball-end 119. During normal operation, frictional engagement between ball-end 119 and socket 124 securely maintains fender system 120 with rigid platform 110. When subjected to an impact above a predetermined threshold (e.g. sufficient to overcome the frictional force between an outer surface of ball-end 119 and an inner surface of socket 124), ball-end 119 is forced from engagement with socket 124, and one or more components of fender system 120 and rigid platform 110 may separate. The energy from impact is thus at least partially redirected to overcoming the frictional force to remove ball-end 119 from socket 124. Damage to fender system 120, rigid platform 110, and/or other components of vehicle 100 may be reduced. Alternatively, or in addition, rigid platform 110 may include one or more sockets 124 and fender system 120 may include one or more ball screws 118. Similarly, one or more components of fender system 120 may be releasably joined with other components of vehicle 100 by one or more ball-and-socket connectors, magnetic connectors, snap-fit connectors, connectors integrally formed with upper deck 111, lower deck 112, frame 113, and/or fender system 120, adhesive, hook and loop connectors, or combinations thereof, for example. One or more other components of vehicle 100 may be separable upon impact. Upper deck 111, lower deck 112, and frame 113 may be releasably attachable to at least partially define rigid platform 110, and may be separable to diffuse an impact or otherwise reduce the occurrence of damage to vehicle 100.

Components of vehicle 100 may be manually separable to interchange or replace various components. In an exemplary embodiment, upper deck 111, lower deck 112, frame 113, and/or fender system 120 may be interchangeable or otherwise replaceable. For example, upper deck 111 may be removed and substituted with a different upper deck 111. In this way, upper deck 111 may be readily replaced due to wear, damage, to provide desired performance characteristics for a user's riding style or skill level, or to provide desired aesthetic characteristics. One or more components of vehicle 100 may be interchangeable by a user to customize vehicle 100, including first and second wheels 101, hubs 102, fenders 121, front bumpers 122, rear bumpers 123, rigid platform 110, upper deck 111, lower deck 112, frame 113, and lights 104, for example. Components of vehicle 100 may be provided individually or as a kit, such as a kit including one or more components that differ in at least one characteristic. For example, a kit may include a set of the same components that differ in at least one of color, material, tread, shape, weight, stiffness, or other characteristic. Components of vehicle 100 may be secured by one or more threaded fasteners, magnetic fasteners, snap-fit fasteners, adhesive fasteners, and/or combinations thereof. One or more components may be disassembled by removing the fasteners and/or separating the components from engagement with one another, and reassembled by joining the fasteners and/or engaging the components with one another.

Alternatively, or in addition, particular components of vehicle 100 may be integrally formed as a unitary component, such as upper deck 111, lower deck 112, and/or frame 113. For example, lower deck 112 may be integrally formed with frame 113, and/or upper deck 111 may be integrally formed with frame 113, as a unitary component. Similarly, front bumpers 122 and rear bumpers 123 may be integrally formed with fenders 121, respectively, and may together be separable from rigid platform 110, or may be permanently attached to rigid platform 110.

Referring still to FIG. 6, wheels 101 are configured to contact the ground supporting vehicle 100 and may include features and characteristics for driving vehicle 100 on a variety of surface types. In an exemplary embodiment, wheels 101 include a rubber or polymer tire 103 surrounding a hub 102. Tire 103 may be substantially solid, foam-filled, or gas-filled, for example, and a hardness may be selected to provide a desired balance of performance and durability while supporting the weight of vehicle 100 and a user operating vehicle 100. Ground contacting surfaces of tire 100 may include a tread pattern to provide a desired level of traction. Wheels 101, including hubs 102 and/or tires 103, having particular performance characteristics may be removed and replaced by alternate wheels 101, hubs 102, and/or tires 103, to customize vehicle 100 for particular terrain or as desired by a particular user.

Rigid platform 110 may be constructed from one or more materials having sufficient rigidity to support one or more users and/or components of vehicle 100. In an exemplary embodiment, frame 113 of rigid platform 110 is made from steel, aluminum, magnesium, plastic, carbon fiber, wood, or combinations thereof. Such materials can provide adequate structural strength to support a user during operation of vehicle 100, while vehicle 100 remains sufficiently low weight. A vehicle 100 having a relatively lower weight can improve efficiency and handling during operation of vehicle 100, and allow ready manipulation of vehicle 100, with one hand, for example, when not in operation. Upper deck 111, lower deck 112, and/or frame 113 may be unitary components that span the center of vehicle 100. Rigid platform 110 including one or more unitary components that span the center of vehicle 100 facilitates rigidity of vehicle 100 and reduces individual articulation of left and right portions of rigid platform 110 independent of each other.

Referring to FIG. 7, a cross-sectional view of vehicle 100 is shown, including internal cavities that provide a volume housing components of vehicle 100. Vehicle 100 may include a housing 109 defined at least in part by upper deck 111, lower deck 112, frame 113, and/or wheels 101. In an exemplary embodiment, housing 109 defines an interior volume that extends continuously on each side of carrying handle 130. Vehicle 100 may be constructed such that one or more components may be positioned within housing 109, between upper and lower decks 111, 112, for example.

Each wheel 101 may define an interior wheel well 140. For example, wheel well 140 defies a volume that extends between an interior edge 142 and inner wheel well wall 143 of wheel hub 102. Wheels 101 have a wheel width ($W_{wheel}$), and wheel well 140 has a depth (d) between interior edge 142 and wall 143. In various exemplary embodiments, wheel well depth (d) may be between $0.1*(W_{wheel})$ and $0.5*(W_{wheel})$, $0.15*(W_{wheel})$ and $0.4*(W_{wheel})$, or about $0.3*(W_{wheel})$. Such ranges provide a wheel well 140 having a volume that can at least partially accommodate an actuator for driving vehicle 100, for example, without unduly affecting the structural integrity of wheels 101. Frame 113 and/or other portions of rigid platform 110 may be at least partially accommodated within wheel well 140, providing a streamlined aesthetic appearance and promoting stability of vehicle 100 during operation. That is, rigid platform 110 extends into each wheel well 140 such that rigid platform 110 and wheels 101 partially overlap (e.g. as viewed in the cross-section shown in FIG. 5).

Internal cavities of vehicle 100 house actuators that drive first and second wheels 101, respectively, to transport vehicle 100 and its payload. The actuators may include first and second electric motors 151 associated with each wheel 101, respectively. Motors 151 may be positioned in close proximity to each wheel 101 and efficiently deliver torque to wheels 101 based on control signals from controller 156. In an exemplary embodiment, wheel wells 140 are larger than first and second motors 151, and motors 151 are positioned substantially within wheel wells 140. Wheels 101 are connected to shafts of first and second electric motors 151, respectively, such that rotational power generated by motors 151 is transferred to wheels 101 to drive vehicle 100.

First and second motors 151 are securely mounted, directly or indirectly, to rigid platform 110. In an exemplary embodiment, motor mounts 152 connect rigid platform 110 with motors 151, and are hidden from external view of vehicle 100 within wheel well 140 and/or housing 109. For example, first and second motor mounts 152 may include an L-shaped bracket that connects rigid platform 110 with first and second motors 151. Motor mount 152 includes a lower portion 153 extending towards a center of rigid platform 110 in a direction substantially parallel with the shaft of motor 151 and longitudinal axis of rotation (A). Rigid platform 110 may include a complementary feature 154 that receives lower portion 153 of motor mount 152, and one or more threaded fasteners join motor mount 153 with rigid platform 110. Alternatively, or in addition, motor mount 152 and rigid platform 110 may be joined with adhesive, snap-fit connectors, frictional engagement between motor mount 152 and rigid platform 110, or other fasteners, for example, that provide a secure connection between motor mount 152 and rigid platform 110.

First and second wheels 101 and rigid platform 110 may be constructed and positioned relative to one another to promote stability and desired handling for a user standing on rigid platform 110 during operation of vehicle 100. For example, rigid platform 110 may be positioned at least partially below the longitudinal axis of rotation (e.g. in a hanging configuration) such that gravitational forces acting on rigid platform 110 tend to urge rigid platform 110 towards a substantially level orientation. Motor mount 152 may be joined to rigid platform 110 such that at least a portion of rigid platform 110, and/or lower portion 153 of motor mount 152, for example, are positioned below longitudinal axis of rotation (A). In various exemplary embodiments, a major surface of upper deck 111 (e.g. where a user places their feet during operation of vehicle 100) is substantially aligned with the longitudinal axis of rotation, and a majority of rigid platform 110 is positioned below longitudinal axis of rotation (A). For example, the center of gravity of rigid platform 110 may be positioned at or below longitudinal axis of rotation (A) when vehicle 100 is at rest and rigid platform 110 is in a level orientation.

Motor mounts 152 may include an L-bracket having a lower portion 153 with an upper surface 155 that is positioned between 0 mm and 50 mm, 5 mm and 40 mm, or about 25 mm below the longitudinal axis of rotation. Such relative positioning of wheels 101 and rigid platform 110 may facilitate a desired level of stability and control of vehicle 100, and allow longitudinal axis of rotation (A) to pass through or near the plane of an upper major surface of upper deck 111.

Referring to FIGS. 7 and 8, drive system 150 of vehicle 100 may include a controller 156, one or more sensors 157, a steering sensor 800, a rider presence sensor 802, and/or actuators, such as electric motors 151, that drive vehicle 100 based at least in part on control signals received from controller 156. Controller 156 receives sensor signals generated by the steering sensor 800 and the rider presence sensor 802, and processes the sensor signals to generate control signals to drive electric motors 151. Control signals may be generated according to a profile configured to respond to user input associated with a steering command, and/or maintain balance of rigid platform 110 and vehicle 100 (e.g., in conjunction with one or more additional sensors that may be used to maintain balance, such as one or more sensors 157, such as to maintain rigid platform 110 in a substantially level orientation). In some embodiments, sensor signals may be amplified by one or more amplifiers before being received by controller 156 and/or control signals may be amplified or otherwise processed after being generated by controller 156.

The steering sensor 800 and the rider presence sensor 802 are positioned to monitor conditions of vehicle 100. For example, the steering sensor 800 and the rider presence sensor 802 may include arrangements of one or more strain gauges configured to monitor one or more conditions of rigid platform 110. Electrical resistance of the strain gauge(s) changes as the rigid platform 110 is deformed, and the deflection or moment at the location of the strain gauge can be determined based on a voltage difference across conductors of the strain gauge, for example. During operation, the deflection or moment at these locations (e.g. due to a user acting on the vehicle 100 during operation) is detected by the steering sensor 800 and/or rider presence sensor 802, and in turn used by the control logic to drive electric motors 151.

Controller 156 may include control logic that generates control signals to each wheel 101 in a coordinated manner (e.g. based on sensor signals received from the steering sensor 800, the rider presence sensor 802, and/or one or more sensors 157). For example, similar torque may be delivered to first and second wheels 101 to drive vehicle 100 forward and backwards in a substantially straight direction. Different torque values may be delivered to first and second wheels 101 (e.g. such that first and second wheels 101 rotate at different speeds) to turn vehicle 100. For example, a driving torque value (e.g. based on a pitch of the rigid platform detected by one or more sensors 157) may be delivered to first and second wheels 101, and may be the same for each of first and second wheels 101. A steering torque value may be determined by controller 156 based on a signal from steering sensor 800. The predetermined steering torque may differ between first and second wheels 101 to cause the vehicle 100 to turn. In an exemplary embodiment, the steering toque value may be additive to the driving torque value. For example, a predetermined steering torque value is generated by the controller based on a particular voltage output from steering sensor 800, and the steering torque value is directed to a particular wheel in addition to the driving torque value to cause the vehicle 100 to turn. In an exemplary embodiment, the controller 156 does not include a closed loop feedback control for generating the steering command. In some exemplary embodiments, first and second wheels 101 may be controlled by independent control logic of controller 156 based on independent sensor signals received from left and right portions of rigid platform 110, respectively.

The rider presence sensor 802 is configured to detect the presence of a payload, such as a user, on rigid platform 100 due to the deflection or moment that may result from the weight of the payload. For example, controller 156 may detect the presence of a user when a threshold change in output from the rider presence sensor 802 is detected. Upon detection of the presence of a user, controller 156 may generate a control signal to activate motors 151 and/or deliver power to motors 151 to maintain rigid platform in a balanced orientation (e.g. parallel to the ground), and/or to activate motors 151 to drive in forward, backward, left, and/or right directions based on a detected user input. Similarly, when the user dismounts or the payload is removed, controller 156 may detect the absence of the user or payload based on a signal from rider presence sensor 802.

Alternatively, or in addition, sensor signals received by controller 156 from the rider presence sensor 802 may allow controller 156 to determine the weight of a user or other payload supported by vehicle 100. The weight can be used by controller 156 in generating control signals for driving electric motors 151, such that the magnitude of torque delivered to electric motors 151 is proportional, or otherwise related, to the weight of the user. For example, a higher magnitude of torque may be delivered by electric motors 151 when a relatively higher weight is detected, and a lower magnitude of torque may be delivered by electric motors 151 when a relatively lower weight is detected.

The steering sensor 800 is configured to detect a moment or deflection at one or more locations of rigid platform 110 that is received by controller 156 to affect motion of vehicle 100 in forwards, backwards, and/or left and right directions. For example, controller 156 may generate control signals to drive wheels 100 based on a deformation or difference in deformation detected by the steering sensor 800 at one or more locations of rigid platform 110. Deflection of rigid platform 110 about longitudinal axis of rotation (A), for example, may result in controller 156 generating power to wheels 151 to balance vehicle 100 and return rigid platform 110 to a neutral orientation. Similarly, controller 156 may determine a turning rate of vehicle 100 based in part on a difference in deflection between left and right portions of vehicle 100 measured by the steering sensor 800. For example, a user may angle their left foot toward their heel and their right foot toward their toes, or position one foot forward and one foot back, for example, such that a torsion force on rigid platform 110 is detected. Controller 156 may then generate control signals to electric motors 151 to turn one wheel 101 at a relatively higher rate than the other wheel 101 such that vehicle 100 turns (e.g., by delivering additional torque to one wheel 101 as compared to the other wheel 101). In some embodiments, the control signals may be amplified before the signals are received by motors 151. The direction and the rate of turn may be higher or lower based on the direction and magnitude of the torsion. For example, the difference in magnitude of torque applied to each wheel 101 may be based on the amount of torque-induced deformation detected by the steering sensor 800. In this way, a user can control the direction of vehicle 100 by applying a twisting input force on rigid platform 110, while controller 156 simultaneously delivers power to wheels 151 based on a pitch angle to attempt to maintain rigid platform 110 in a neutral configuration.

The steering sensor 800 and rider presence sensor 802 may be positioned at various locations on rigid platform 110. In one example, the rider presence sensor 802 and the steering sensor 800 are positioned centrally on rigid platform 110 (e.g. along mid-sagittal reference plane (B)). Alternatively, or in addition, the rider presence sensor 802 and/or the steering sensor 800 may be positioned on left and right portions of the mid-sagittal reference plan (B), and/or along longitudinal axis of rotation (A).

In an exemplary embodiment, the steering sensor 800 and the rider sensor 802 are affixed (e.g., directly affixed) to an interior surface of rigid platform 110. The steering sensor 800 and rider presence sensor 802 may thus be configured to measure forces in the rigid platform 110. Rigid platform 110 may be a unitary rigid platform 110 that extends at least substantially between first and second wheels 101.

The steering sensor 800 and/or the rider presence sensor 802 may be affixed to the interior surface of the rigid platform 110 at or near a radius from the longitudinal axis of rotation (A) that provides at least a predetermined amount of sensitivity to distortions in the rigid platform caused by a torque of rigid platform 110 and/or the weight of a rider. For example, the steering sensor 800 may be positioned a predetermined distance away from longitudinal axis of rotation (A) and mid-frontal reference plane (C). In some embodiments, when torsion is applied to rigid platform 110, a relatively greater linear distortion (e.g., stretching or compression) in a circumferential surface about the torsional axis may be detected as the radial distance between the torsional axis and the circumferential surface increases. The detected change may thus increase with a larger predetermined distance between the sensor and axis increases.

The controller 156 is also configured to engage and disengage a rider mount/dismount mode. As a rider attempts to dismount the vehicle 100, the rider will generally remove one foot from the rigid platform 110 as he or she steps off. In some examples, such actions may apply an uneven distribution of weight across the rigid platform 110 that would appear to the controller 156 as a turn command under normal riding conditions, but may be unintended during dismount (e.g., the rider would not want the vehicle 100 to move while stepping off). The controller 156 may be configured to detect a predetermined pattern of user inputs (e.g., torques and/or other forces sensed by the sensors 800 and/or 802) to engage a dismount mode in which the vehicle remains substantially immobile (e.g., the steering is locked). For example, the controller 156 may be configured to detect when the rider shifts their weight quickly while otherwise standing generally still (e.g., wiggling, bouncing, or twisting several times to engage the dismount mode). The controller may also be configured to keep the vehicle 100 in a mount/dismount mode until disengaged by a predetermined pattern of user inputs. For example, the vehicle 100 may remain substantially immobile until a predetermined wiggle, bounce, or twist is detected as a command to disengage the steering lock and begin or resume normal riding operations.

The controller 156 is also configured to turn on and/or turn off in response to rider input applied to the rigid platform 110, in which the vehicle 100 is commanded to begin self-balancing when a rider oscillates the board back and forth with his or her foot. For example, the rider may gently place a foot on the device, with little or no downward force, and tilt the rigid platform 110 back and forth quickly with his or her foot to turn on the balancing torque (e.g., a "wiggle to turn on" feature).

In various exemplary embodiments, the rider presence sensor 802 and/or the steering sensor 800 include one or more strain gauges in quarter Wheatstone bridge, half Wheatstone bridge, and/or full Wheatstone bridge configurations. One or more strain gauges may be arranged parallel with the longitudinal axis of rotation (A), perpendicular to the longitudinal axis (A), and/or angled relative to the longitudinal axis of rotation (A), such as angled 45° (e.g., about 45°, within +/- 5°) relative to the longitudinal axis of rotation (A).

The steering sensor 800 and/or rider presence sensor 802 can improve the reliability of a rideable vehicle. The rider presence sensor 802 and the steering sensor 800 may be protected within the interior of the rigid platform 110 such that exposure to mechanical damage (e.g., due to rain, debris, excessive force) is reduced. Alternatively or additionally, the steering sensor 800 and/or rider presence sensor 802 may have few or zero moving parts that could result in error by moving out of an operational position. In an exemplary embodiment, steering sensor 800 and rider presence sensor 802 do not include a switch sensor or push-button sensor.

In some exemplary embodiments, one or more sensors 157 may be used to determine a pitch angle of rigid platform 110. For example, sensors 157 may include a multi-axis accelerometer, such as a six-axis accelerometer and gyroscope, that detects the pitch angle of rigid platform 110. Controller 156 may adjust the torque delivered to wheels 101 by electric motors 151 based on a detected pitch angle or pitch rate. For example, a change in pitch or pitch rate may result from a change in center of gravity of a user or other payload supported on rigid platform 110. Alternatively, or in addition, pitch or pitch rate may change by a user pushing downwards on the front or rear of rigid platform 110. Controller 156 may generate a control signal to the electric motors 151 to return rigid platform 110 to a neutral orientation parallel to the ground (e.g. a pitch angle of 0°), causing wheels 101 to drive vehicle 100.

Drive system 150 includes a battery 158 to power electric motors 151. Battery 158 may be a high-energy density, rechargeable battery positioned within housing 109 and/or wheel well 140. In an exemplary embodiment, drive system 150 includes first and second batteries that respectively deliver power to first and second electric motors 151, controller 156, and/or other components of vehicle 100, such as lights 104 and speakers 105. In other exemplary embodiments, drive system 100 includes a single battery or pack of batteries 158 that deliver power to both electric motors 151. Batteries 158 may be rechargeable by connection to an appropriate power source, and/or replaceable by accessing the interior of housing 109 and/or wheel well 140 and removing the existing batteries 158 and replacing with new batteries 158.

Batteries 158 may be at least partially accommodated in a recess or cavity formed in rigid platform 110, such as lower deck 112 and/or frame 113. In an exemplary embodiment, batteries 158 are positioned completely below longitudinal axis of rotation (A) and substantially centered along longitudinal axis of rotation (A) so that weight of batteries 158 are evenly balanced to the front and rear of the longitudinal axis of rotation (A). Accordingly, batteries 158 may be positioned between longitudinal axis of rotation (A) and the ground supporting vehicle 100, and substantially aligned with longitudinal axis of rotation (A). Such positioning may provide balanced weight distribution about longitudinal axis of rotation (A) to facilitate stability of rigid platform 110 during operation.

Vehicle 100 may include one or more lights 104 that emit light visible by a user operating vehicle 100 and/or bystanders. Rigid platform 110 includes lights 104 along a front edge and a rear edge. Lights 104 may provide illumination of the surroundings of vehicle 100, particularly during operation of vehicle 100, provide a desired aesthetic appearance including emission of one or more colors, and/or provide an alert to the user or a bystander. In an exemplary embodiment, lights 104 include colored LEDs controlled by controller 156. Power to illuminate LEDs may be delivered automatically by controller 156 when vehicle 100 is in operation, or may be manually actuated by a user input (e.g. by a dedicated input configured to activate lights 104).

Vehicle 100 may include a speaker 105 that outputs audio to a user and/or bystanders. Speaker 105 may be positioned within rigid platform 110 and deliver audio through one or more openings or perforations. In an exemplary embodiment, speaker 105 is positioned in a watertight cavity of rigid platform 110 and sound waves emitted by speaker 105 are transmissible through one or more components of rigid platform 110.

Lights 104 and/or speakers 105 may be configured to alert a user and/or bystander regarding the condition or performance of vehicle 100. For example, the output of lights 104 may change based on operation of vehicle 104. Upon activation of vehicle 100, lights may exhibit a pattern of flashes, color, intensity changes, etc. Similarly, during operation, the output of lights 104 may signal a direction, acceleration, or velocity of vehicle 100. Lights 104 may flash at a high rate during periods of rapid acceleration or velocity, and flash or remain constant during period of low acceleration or velocity. The output of lights 104 on left and right sides of rigid platform 104 may differ to signify vehicle 100 is turning to the left or right. In some exemplary embodiments, the lights may flash according to a predetermined pattern to signal that battery 158 may be low and recharge or replacement may be required soon. Alternatively, or in addition, speakers 105 may output audio alerts to a user or bystander to signify a condition of vehicle 100, or to provide instructions to a user regarding operation of vehicle 100. Speakers 105 may output one or more tones, voice alerts, or other alerts to the user.

Vehicle 100 may have one or more variable control settings that may be changed to affect the performance or characteristics of vehicle 100. For example, vehicle 100 may include a variable balancing control setting that affects the sensitivity and/or responsiveness to a change in pitch or pitch rate of rigid platform 110. A relatively higher balancing control setting may increase sensitivity such that a relatively larger torque is delivered to wheels 101 in response to a relatively smaller change in pitch or pitch rate and may provide vehicle 100 with a greater tendency to maintain an upright payload and pitch angle close to neutral. Similarly, a relatively lower balancing control setting may decrease the sensitivity such that a relatively smaller torque is delivered to wheels 101 in response to a relatively smaller change in pitch or pitch rate. Alternatively, or in addition, vehicle 100 may include a turning sensitivity setting that affects the sensitivity to variations in deflection of rigid platform 110, or other sensor inputs that are used to determine a direction of vehicle 100. For example, a higher turning sensitivity setting may provide greater responsiveness to differential deflection between left and right portions of rigid platform 110, and may result in a relatively greater difference in torque between first and second wheels 101.

One or more settings of vehicle 100 may be manually variable by a user. For example, vehicle 100 may include an application on a cell phone, tablet, computer, or other device in wireless communication with controller 156. A user may transmit a desired balancing control setting or turning sensitivity setting from the application to controller 156. Alternatively, or in addition, vehicle 100 may include one or more vehicle setting inputs 159 such that a user may adjust the vehicle settings by actuation of the vehicle setting inputs 159. In this way, performance characteristics can be customized to a user's ability level or riding style.

One or more settings of vehicle 100 may be automatically varied (e.g., by controller 156). For example, the vehicle 100 may include a load testing feature that performs a load test when the sensor inputs indicate that a rider is stepping onto the rigid platform 110. When the rider presence sensor 800 detects the rider, the vehicle 100 can apply a short and small amount of torque which should, in turn, twist the rigid platform 110 up into the rider's foot. If the user's foot is not present, a high angular rate of change will be detected, and the controller 156 will determine that the load test has failed. In response to the failure, the vehicle 100 will not turn the self-balancing function on. If the user's foot is present, then there will be relatively less or no angular rate and the vehicle 100 determines that the load test has passed. In response to the load test being passed, the vehicle 100 may then apply balancing torque appropriate for balancing while a user is supported on the vehicle (e.g., because a control gain appropriate for balancing vehicle 100 including the weight of a user may be different than a control gain for balancing vehicle 100 alone).

In an exemplary embodiment, vehicle 100 may have a training mode in which control settings are provided to promote rapid proficiency in operating vehicle 100. For example, particular control settings may be relatively more or less sensitive so that vehicle 100 is relatively easier to operate in a controlled manner. Vehicle 100 may provide audible training instructions or commands emitted from a speaker 105 of vehicle 100. A user may be provided with real time instructions regarding technique to direct vehicle 100 forwards, backwards, and/or turn left and right. Alternatively, or in addition, real-time audio or visual instructions may be delivered to a user via a smartphone, tablet, computer or other device in communication with vehicle 100.

Various control settings of vehicle 100 may be automatically adjusted by controller 156. For example, controller 156 may automatically adjust a balancing control setting or turning sensitivity based on the environmental conditions that vehicle 100 is operating in (e.g. smooth surface vs. rough terrain) or characteristics of a user, such as weight or riding style, detected based on sensor signals from the steering sensor 800, the rider presence sensor 802, and or the sensors 157. In an exemplary embodiment, control settings of vehicle 100 are automatically adjusted based on a skill level of the user. The control settings of vehicle 100 may be increasingly sensitive based on the duration that a user has operated vehicle 100. Alternatively, or in addition, control settings of vehicle 100 may be altered based on measured characteristics of the user's riding style. Controller 156 may automatically adjust one or more control settings to be increasingly sensitive when a user that operates vehicle 100 in a smooth and well-controlled manner, while one or more control settings may be adjusted to be less sensitive when a user operates vehicle 100 in an erratic or uncontrolled manner. For example, the control settings may be gradually adjusted over a period of minutes, hours, days, or weeks of operating vehicle 100 as the user's proficiency develops.

A software application associated with vehicle 100 may allow a user to control various functions of vehicle 100. For example, vehicle 100 may be manually-driven or self-driven based on user input received by the application via a smartphone, tablet, computer, or other device. A user may input a command to drive vehicle 100 in a self-driving mode to direct vehicle 100 in a desired direction or to a particular location. Controller 156 may determine whether a user is present on vehicle 100 based on inputs from the rider presence sensor 802. If a user is not present, vehicle 100 may respond to the command by driving in the desired direction or to the particular location. In some exemplary embodiments, the application may include a controller that allows a user to provide real-time commands to affect the speed and direction of vehicle 100. If a user is supported on vehicle 100, the manually or self-driving function of vehicle 100 may be disabled by controller 156. In various exemplary embodiments, a user may deliver a command to vehicle 100 to control various functions, including the color and pattern of one or more lights 104, audio output of speaker 105 (e.g. to output music from the device, audio instructions to a user, or other audio output), and other functions of vehicle 100.

The vehicle 100 may have a demonstration mode in which one or both motors 101 are activated to turn slowly and/or the onboard lights 104 change. In an exemplary embodiment, the vehicle 100 can be stood vertically on one wheel and display a colorful, entertaining, and/or rotating column. In some examples, both motors 101 can be rotated in the same direction and at the same speed, such that the upper-most wheel appears to be stationary while the rigid platform 110 spins. Objects placed on top of the upper wheel can appear to remain stationary as well (e.g., to hold promotional materials stationary in a display, etc.).

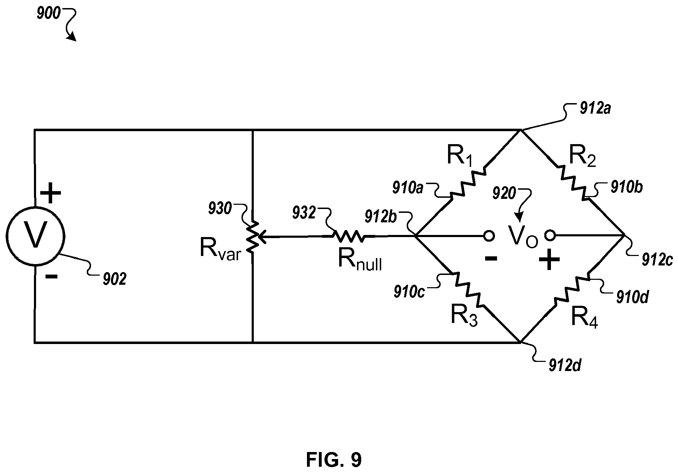

FIG. 9 is a schematic diagram of an exemplary sensor circuit 900. In some embodiments, a sensor circuit 900 can be included in vehicle 100 as all or part of the steering sensor 800, the rider presence sensor 802, and/or the sensors 157, for example. The sensor circuit 900 may include a Wheatstone bridge circuit (e.g., ¼ Wheatstone bridge, ½ Wheatstone bridge, full Wheatstone bridge, etc.). The Wheatstone bridge circuits can be used to measure an unknown electrical resistance by balancing two legs in which one leg includes the unknown resistance.

The sensor circuit 900 includes a power source 902 and four resistors 910a-910d connected in a square. The resistors 910a-910d are connected to each other at nodes 912a through 912d. The circuit contains a voltage sensor 920 (e.g., a voltmeter) which can detect the voltage difference between nodes 912c and 912b. The voltage output Vo value from the voltage sensor 920 is provided as the output signal of the circuit 900. Each of the resistors 910a-910d has a current (e.g., $i_1$, $i_2$, $i_3$, and $i_4$), resistance ($R_1$, $R_2$, $R_3$, and $R_4$), and voltage ($V_1$, $V_2$, $V_3$, and $V_4$), which are related to each other through Ohm's law. In use, one or more of the resistors 910a-910d can be a strain gauge (e.g., that provides an electrical signal associated with a strain of the substrate to which it is attached).

The voltage output Vo of the circuit 900 at the voltage sensor 920 may be characterized according to the following relationship:

$$V_O = \left[ \frac{R_3}{R_3 + R_4} - \frac{R_2}{R_1 + R_2} \right] \cdot V_{EX}$$

Where $V_{EX}$ is the voltage provided by the power source 902.

Under ideal conditions, this equation shows that when $R_1/R_2 = R_3/R_4$, the voltage output Vo will be zero. In some examples, in this condition the bridge is said to be balanced, and any change in resistance in any arm of the bridge will result in a nonzero output voltage at the voltage sensor 920.

In an exemplary embodiment, at least one of the arms of the bridge is a strain gauge. Changes in the strain gauge resistance unbalance the bridge and produce a nonzero output voltage that is representative of the strain placed on the strain gauge. For example, the sensor circuit 900 can be configured as a quarter Wheatstone bridge circuit in which one of the resistors 910a-910d is a strain gauge. In some embodiments, two of the resistors 910a-910d are strain gauges such that the circuit 900 is configured as a half-bridge circuit. The sensitivity of the circuit 900 can be doubled by including two strain gauges arranged in different (e.g., perpendicular) directions. In some embodiments, all four of the resistors 910a-910d are strain gauges such that the circuit 900 is configured as a full-bridge circuit. The sensitivity of the circuit 900 can be further increased by including four strain gauges. For example, two gauges can be arranged to experience tension and two gauges can be arranged to experience compression when the substrate is stressed in a particular manner.

In some exemplary embodiments, circuit 900 includes an adjustable resistor 930 that is adjustable to affect the bridge output, and/or a range resistor 932 that sets the range that the circuit 900 can balance. The adjustable resistor 930 may be a potentiometer, varistor, programmable resistor, or other adjustable resistor. For example, the sensor circuit 900 may include an offset generator that generates a predetermined offset of the voltage output Vo (e.g., as compared to the voltage output Vo that would otherwise result under particular conditions). The adjustable resistor 930 can be configured to set the voltage output Vo to a predetermined non-zero voltage when no strain is detected. For example, when no strain is detected, the adjustable resistor 930 may generate a fixed offset that increases Vo+. Vo+ may thus be maintained at a higher value than Vo- over an operational range of detected strains, including when no strain is detected, and the voltage output Vo may thus have a positive value both when strain is applied in multiple directions and when no strain is detected.

The offset value may be controlled by the adjustable resistor 930, and may be selected based on the desired parameters of sensor circuit 900. For example, when sensor circuit 900 functions as a steering sensor, adjustable resistor 930 may be used to generate an offset having a magnitude sufficiently large that Vo remains positive over a range of strains in first and second directions associated with left and right steering inputs, respectively. In this way, a permanent offset is present between Vo- and Vo+ such that voltage output Vo remains positive both when left and right steering inputs are received. The voltage output Vo can be readily amplified by an amplifier and processed by controller 156. For example, the stepped up value of voltage output Vo may be more easily amplified (e.g., with a lower gain) as compared to a smaller voltage output Vo that may otherwise result if an offset were not generated by adjustable resistor 930. In other words, small changes from no-strain condition can be detected without an unduly large gain because a positive voltage output Vo is generated even when no strain is detected.

In one example, when no strain is detected, Vo- has a value of (X) volts while Vo+ has a value of (X+Y) volts. The predetermined offset (e.g., of Y volts) generated by adjustable resistor 930 may be maintained over an operational range of detected strains. For example, the adjustable resistor 930 can be adjusted to cause the circuit to provide a voltage output Vo when zero strain is detected (e.g., 3 $\mu$V), that can increase or decrease, while still remaining positive, when strain is detected in opposing directions.

A sensor circuit 900 that generates a predetermined voltage offset, and/or delivers its voltage output Vo to an amplifier having a predetermined gain, may be included as all or part of steering sensor 800 and/or rider presence sensor 802. Such a configuration can facilitate reliable detection of steering inputs associated with both left and right steering commands for both first and second wheels 101 (e.g., while requiring only a single bridge circuit). For example, the voltage output Vo of sensor circuit 900 may be configured to have a positive output when the rigid platform of vehicle 100 is not subject to torsion, such as when the user's weight is evenly distributed (e.g., the user is not angling their left foot forward and their right foot backwards, or vice versa). The voltage output Vo of the sensor circuit 900 may thus be configured to increase with strain in a first direction (e.g., $3\mu$V-$6\mu$V) and decrease but remain positive with strain in a second, opposite direction. In this way, both left and right steering inputs can be received and processed by controller 156 to drive multiple motors 151 using only a single strain sensor, such as provided by sensor circuit 900. A detected voltage greater than the zero strain offset (e.g., in a range between $3\mu$V-$6\mu$V) may be processed as an input to turn right, and a detected voltage less than the zero strain offset (e.g., in a range between $3\mu$V-$0\mu$V) may be processed as an input to turn left.

In some implementations, the voltages at the nodes 912c and 912b can be processed independently to determined control signals to drive the motors 151 independently. For example, a user-applied torque to the rigid platform 110 may be measured at node 912c, amplified, and processed by controller 156 to drive the right wheel 101 forward at a first predetermined speed (e.g., 10rps), and measured at node 912b, amplified, and processed by controller 156, to drive the left wheel forward at second predetermined speed (e.g., 15rps), causing the vehicle 100 to move forward in a curve to the right. In some embodiments, the cost and/or complexity of the drive circuity of the vehicle 100 can be reduced (e.g., relative to some other solutions that require multiple additional sensors, processors, and/or amplifiers). For example, a single, two-channel amplifier may be used to process the voltage output Vo from both the steering sensor 800 and the rider presence sensor 802.

In an exemplary embodiment, the voltage output Vo is amplified before being detected by controller 156 and/or other components of vehicle 100. The amplifier may have a desired gain, such as between, 100x and 5000x, 250x and 1000x, or between 500x and 800x. The amplified voltage output Vo facilitates detection of small changes in strain. In an exemplary embodiment, an adjustable resistor (e.g., potentiometer, varistor, programmable resistor, or other adjustable resistor may be included that provides a predetermined gain and/or allows adjustability of the predetermined gain.

Rider presence sensor 802 may generate a voltage output Vo received by an amplifier that amplifies the change in voltage output Vo generated when a user steps onto or off of the vehicle. The gain applied to the voltage output Vo from the rider presence sensor 802 may be selected to provide a change that is reliably identifiable as caused by the presence or absence of the user (e.g. as opposed to relatively miniscule changes that could result from environmental factors, inadvertent contact by a user, etc.).

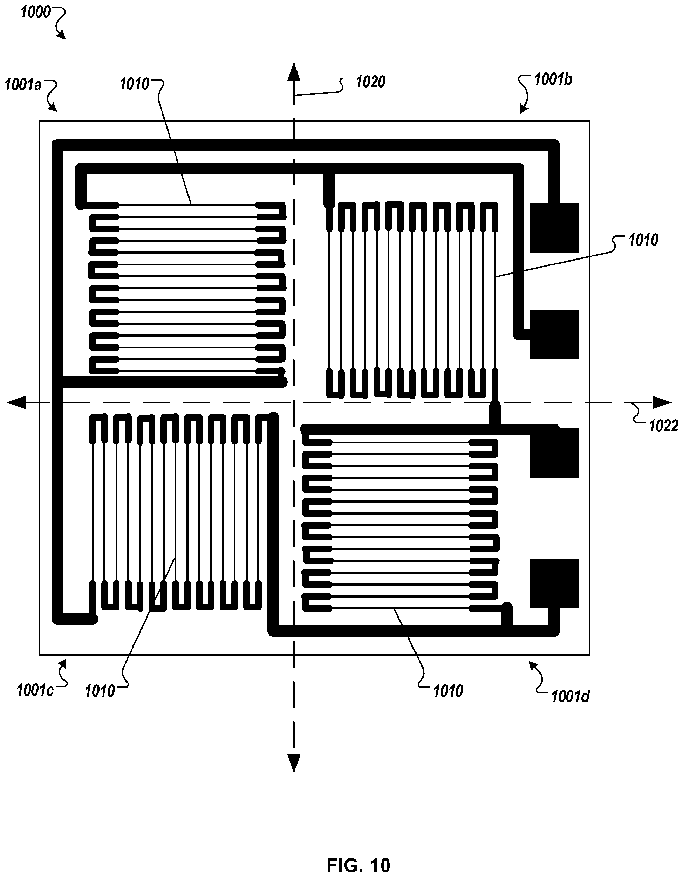

FIG. 10 is a top view of an exemplary strain sensor 1000. In some embodiments, the strain sensor 1000 can be included in the vehicle 100 as the steering sensor 800, the rider presence sensor 802, and/or the sensors 157 of FIG. 8. The strain sensor 1000 includes four strain gauges 1001a-1001d. Each of the strain gauges 1001a-1001d is a bonded metallic strain gauge, however in other embodiments other types of strain gauges can be used (e.g., piezoresistive strain gauges). In general, metallic strain gauges consist of a very fine wire metallic foil arranged in a grid pattern 1010. The length of the wire or foil in the grid pattern 1010 provides a measurable resistance, and this resistance and increase and/or decrease as the wire or foil is compressed (e.g., thereby making the wire or foil shorter and less resistive) and/or stretched (e.g., thereby making the wire or foil longer and more resistive).

The grid pattern 1010 is arranged such that the majority of the length of the wire or foil extends parallel to the direction of a strain to be measured. In the illustrated example, the strain gauges 1001b and 1001c are arranged parallel to an axis 1020, and the strain gauges 1001a and 1001d are arranged parallel to an axis 1022. As such, the strain gauges 1001b and 1001c are arranged to sense tension and/or compression parallel to the axis 1020, and the strain gauges 1001a and 1001d are arranged to sense tension and/or compression parallel to the axis 1022.

One or more of the strain gauges 1001a-1001d can be used in sensor circuit 900 as one of resistors 910a-910d. For example, sensor circuit 900 may include only a single strain gauge 1001a, 1001b, 1001c, or 1001d, in a quarter Wheatstone bridge configuration. In some embodiments, sensor circuit 900 may include two of strain gauges 1001a, 1001b, 1001c, or 1001d in a half-bridge configuration. In some embodiments, sensor circuit 900 may include three of the strain gauges 1001a-1001d in a three-quarter Wheatstone bridge configuration. In some embodiments, sensor circuit 900 may include all four of the strain gauges 1001a-1001d in a full-bridge configuration.

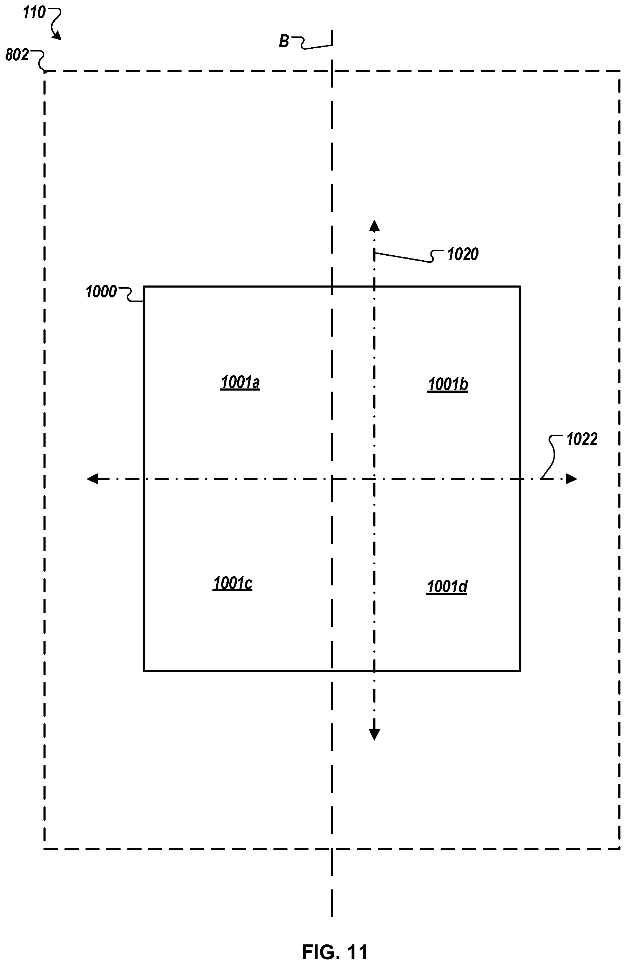

FIG. 11 is a top view of the orientation of the exemplary rider presence sensor 802 of FIG. 8 relative to the exemplary vehicle 100 of FIG. 1. In the illustrated example, the rider presence sensor 802 is affixed to the rigid platform 110 and includes the strain sensor 1000.

As described above, the mid-sagittal reference plane (B) divides vehicle 100 into imaginary left and right halves (e.g., and extends perpendicular to a mid-frontal reference plane (C) that divides vehicle 100 into imaginary front and rear halves). The mid-sagittal reference plane (B) may also divide the rider presence sensor 802 into imaginary right and left portions. That is, the rider presence sensor 802 may span the mid-sagittal reference plane (B) such that portions of the rider presence sensor 802 are present both to the left and to the right of mid-sagittal reference plane (B).

In one example, the strain sensor 1000 of the rider presence sensor 802 is oriented such that the axis 1020 is parallel to the mid-sagittal reference plane (B), and the axis 1022 is perpendicular to the mid-sagittal reference plane (B). Rider presence sensor 802 may be positioned centrally on rigid platform 110, for example, such that the mid-sagittal reference plan (B) divides the rider presence sensor 802 into imaginary left and right halves. In such an orientation, two of the strain gauges 1001a-1001d of the strain sensor 1000 are oriented with their foil or wire patterns substantially parallel to the mid-sagittal reference plane (B), and two of the strain gauges 1001a-1001b are oriented with their foil or wire patterns substantially perpendicular to the mid-sagittal reference plane (B).

In use, with the rider presence sensor 802 affixed to the rigid platform 110 such that the axis 1022 is arranged perpendicular to the mid-sagittal reference plane (B), the strain gauges 1001a and 1001d are arranged generally parallel to bending moments that extend along the rigid platform 110 between the wheels 101. For example, the weight of a rider on the rigid platform 110 can deflect and distort the rigid platform 110 and the rider presence sensor 802 affixed to the rigid platform 110. The rider presence sensor 802 can provide a rider presence signal associated with distortion of the strain gauges that is representative of the presence of the rider's weight on the rigid platform 110. One or more of the strain gauges 1001a-1001d can be used in strain sensor 1000 of the rider presence sensor 802. For example, strain sensor 1000 may include only a single strain gauge 1001a, 1001b, 1001c, or 1001d in a quarter Wheatstone- bridge configuration. In some embodiments, the strain sensor 1000 may include two of strain gauges 1001a, 1001b, 1001c, or 1001d in a half-bridge configuration. In some embodiments, the strain sensor 1000 may include three of the strain gauges 1001a-1001d in a three-quarter -Wheatstone bridge configuration. In some embodiments, strain sensor 1000 may include all four of the strain gauges 1001a-1001d in a full-bridge configuration.

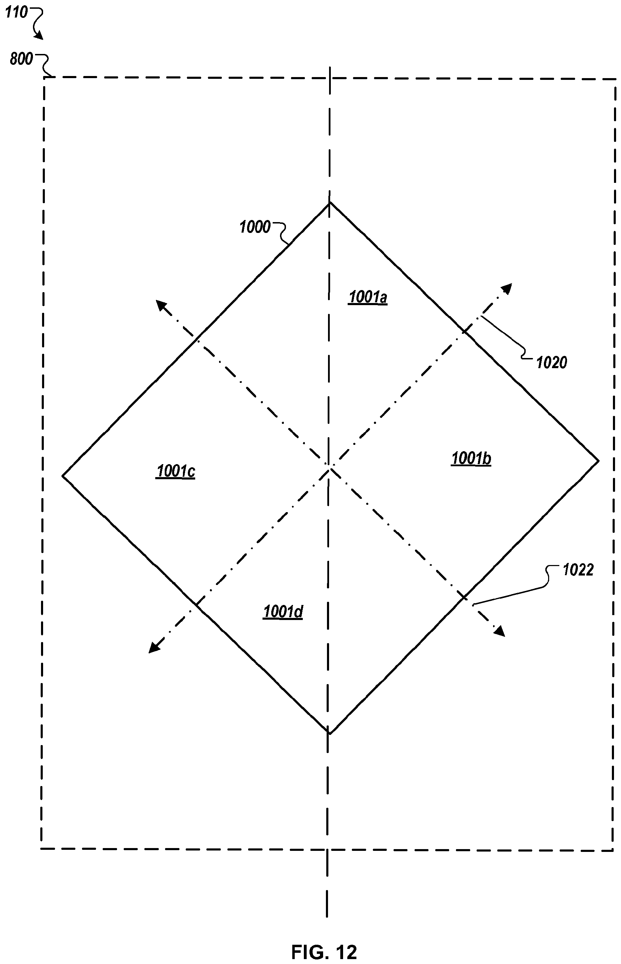

FIG. 12 is a top view of the orientation of the exemplary steering sensor 800 of FIG. 8 relative to the exemplary vehicle 100 of FIG. 1. In the illustrated example, the steering sensor 800 is affixed to the rigid platform 110 and includes the strain sensor 1000.

As described above, the mid-sagittal reference plane (B) divides vehicle 100 into imaginary left and right halves, and may also divide the steering sensor 800 into imaginary right and left halves. That is, the steering sensor 800 may span the mid-sagittal reference plane (B) such that a portions of the steering sensor 800 are present both to the left and to the right of mid-sagittal reference plane (B). In some embodiments, steering sensor 800 is bisected by mid-sagittal reference plane (B) such that the steering sensor 800 is evenly divided by mid-sagittal reference plane (B). The steering sensor 800 may be centered on the rigid platform (e.g. such that left and right edges of steering sensor 800 are equidistant from left and right wheels 101). A centrally located steering sensor 800 facilitates reliable detection of torsional forces on the rigid platform (e.g. generated by differing forces from a user's left and right feet). The steering sensor 800 may thus accurately detect torsion both when a user's left foot is tilted forward (e.g. with more weight on the user's left toes than the left heel) and the user's left foot is tilted backward (e.g., with more weight on the right heel than the right toes), and vice versa.

In the illustrated example, the strain sensor 1000 of the steering sensor 800 is oriented such that the axis 1020 is at approximately a 45° angle to the mid-sagittal reference plane (B), and the axis 1022 is at approximately a 45° angle to the mid-sagittal reference plane (B). While the steering sensor 800 is shown with a 45° rotation relative to the mid-sagittal reference plane (B), other angles may be appropriate. For example, the 45° angle may provide a configuration in which all four of the strain gauges 1001a-1001d have approximately the same angular rotation relative to the mid-sagittal reference plane (B). In various other exemplary embodiments, axis 1020 of steering sensor 800 may form an angle between 40° and 50°, between 30° and 60°, or between 10° and 80°, for example. In some embodiments, the voltage output Vo may be processed according to a predetermined relationship related to the orientation of steering sensor 800.

In an exemplary embodiment in which the steering sensor 800 is affixed to the rigid platform 110 with the axis 1020 arranged at approximately a 45° angle to the mid-sagittal reference plane (B), the strain gauges 1001a and 1001d are arranged generally parallel to torsional strains in a first direction that extend along the rigid platform 110 between the wheels 101. For example, a rider standing with both feet on the rigid platform 110 can apply pressure with the ball or toe of their left foot (relative to the illustrated example) while applying pressure with their right heel to slightly distort (e.g., torque) the rigid platform 110 in a first direction, causing the strain gauges 1001a and 1001d to extend lengthwise and vary the voltage that can be read by the voltage sensor 920. This voltage signal can be received by the controller 156 and processed to provide motor drive signals that can cause one of the motors 101 to rotate faster than the other, which in turn may cause a differential steering in a first direction. In another example, the rider can apply pressure with the ball or toe of their right foot (relative to the illustrated example) while applying pressure with their left heel to slightly distort (e.g., torque) the rigid platform 110 in the opposite direction, causing the strain gauges 1001b and 1001c to extend lengthwise and vary the voltage that can be read by the voltage sensor 920. This voltage signal can be received by the controller 156 and processed to provide motor drive signals that can cause one of the motors 101 to rotate faster than the other to cause a differential steering in an opposite direction.

One or more of the strain gauges 1001a-1001d can be used in strain sensor 1000 of the steering sensor 800. For example, the strain sensor 1000 may include two of strain gauges 1001a, 1001b, 1001c, or 1001d in a half-bridge configuration. In some embodiments, strain sensor 1000 may include all four of the strain gauges 1001a-1001d in a full-bridge configuration.

Signals from the steering sensor 800 are amplified or are otherwise used in a determination of the amounts of torque to be applied to the wheels 101, in which a predetermined torque may be generated at one or both of the wheels 101 based on a particular voltage signal or voltage signals from the steering sensor 800 according to a predetermined relationship. In some exemplary embodiments, a stability torque is generated based on a signal based on a sensed pitch angle of the rigid platform 110 (e.g., a signal from an accelerometer or gyroscope). The pitch angle signal and the steering signal(s) values are added to determine the total torque to be delivered to the wheels 101. In an exemplary embodiment, the stability torque is equal at both the left and right wheels 101 and the steering torque differs between the left and right wheels 101 when a left or right steering input is detected. Each wheel 101 is controlled in an open loop without electrical feedback. Wheel and/or linear speed sensors may not be necessary, and the rider ultimately determines the speed, direction, and turn rate of the vehicle 100 by shifting the distribution of his or her weight, angling their feet, etc., across the rigid platform 110.

The use of the steering sensor can reduce the cost and/or complexity of the circuitry used to drive the vehicle 100. For example, the vehicle 100 can use a two-channel amplifier to amplify the voltages at the inputs of the voltage sensor 920, thus avoiding the additional costs and complexity of using multiple additional sensors and amplifiers.

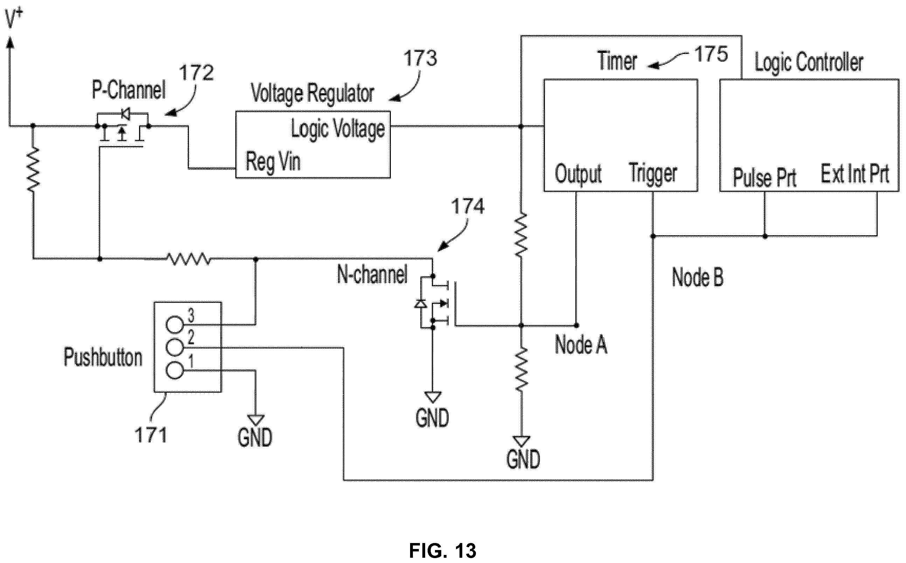

Referring to FIG. 13, an exemplary control circuit 170 is shown that may be included on a printed circuit board of controller 156. Operation of vehicle 100 may be initiated by actuating an on/off button 171. For example, when in an off state, actuation of on/off button 171 may momentarily pass current through a voltage divider circuit, which provides the voltage to the gate of a P-Channel MOSFET 172 to turn on vehicle 100. The P-Channel MOSFET source may be connected to the positive battery terminal and its drain to a switching voltage regulator 173. When the P-Channel MOSFET 172 is turned on, the switching voltage regulator 173 receives power and outputs a logic voltage to the digital system. The logic voltage may be configured to latch an N-Channel MOSFET 174 such that current continues flowing through voltage divider circuit and maintains P-Channel MOSFET 172 in an on state. In an exemplary embodiment, the N-Channel MOSFET 174 has a gate connected to the logic voltage, a drain connected to the lowest level of the voltage divider circuit, and a source connected to ground of the system. The gate of N-Channel MOSFET 174 may be connected, alternatively or in addition, to an output of a single timer integrated circuit 175. When the output of the single timer integrated circuit 175 is low, the gate of the N-Channel MOSFET 174 may also be low such that the N-Channel MOSFET will turn off. When the N-Channel MOSFET turns off, the P-Channel MOSFET 172 will turn off, cutting power to the voltage regulator 173. The single timer integrated circuit 175 may be configured to detect the absence of a pulse to a trigger pin of the single timer integrated circuit 175, such as at node (B), received from logic controller 177 as a momentary digital low signal. If the pulse is not present after a predetermined amount of time, the output of the single timer 175 will go low. The node (B) may be electrically connected to the pulsing logic controller pin and the on/off button 171 such that actuation of on/off button 171 momentarily brings node (B) low.

Alternatively, or in addition, node (B) may be connected to a pin of the logic controller that is configured to function as an external interrupt. When the external interrupt pin is brought to digital low, a turn-off routine may be initiated. Power to the digital logic system may be terminated if the turn off routine is commenced outside of the predetermined time when the signal is low from the logic control pulse. Such a configuration facilitates a start-up sequence that allows a user to turn vehicle 100 on by actuation of button 171 or by detection of a rider's weight being applied to the vehicle 100 by rider presence sensor 800, and to disconnect the logic system from power when vehicle 100 is turned off by actuation of button 171 or by detection of the rider's weight being removed from the vehicle by the rider presence sensor 800.

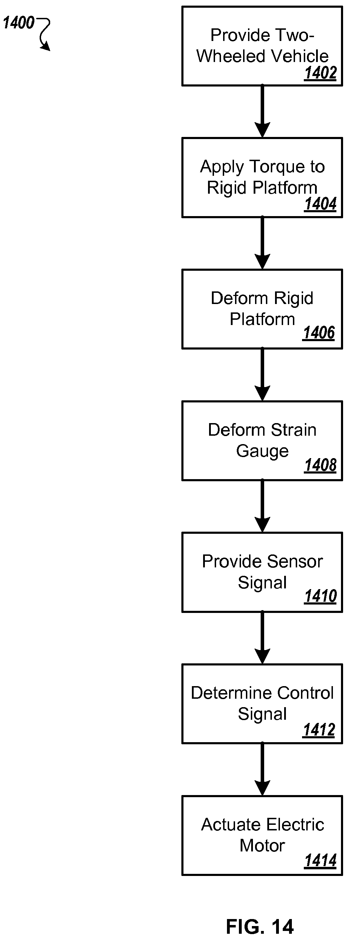

FIG. 14 is a flow diagram of an example process 1400 that may be used to control the exemplary vehicle 100 of FIG. 1. At 1402 a two-wheeled vehicle is provided. The two-wheeled vehicle includes first and second wheels that define a common longitudinal axis of rotation, a rigid platform extending along the common longitudinal axis between the first and second wheels, and comprising an upper deck that defines a left foot portion and a right foot portion, a first strain sensor affixed to the rigid platform, the first strain sensor intersected by a mid-sagittal reference plane that divides the rigid platform into left and right halves, and a control system configured to output a steering control signal based on a sensor signal received from the first strain sensor. For example, the vehicle 100 can be provided.

At 1404 a first torque is applied to the rigid platform. For example, a rider standing with both feet on the upper deck 111 can apply toe pressure to the left foot portion 111a while applying heel pressure to the right foot portion 111b. Such uneven loading of the upper deck 111 will impart a torque and/or torsion across the length of the rigid platform.

In some embodiments, applying a first torque to the rigid platform also includes applying a force to at least one of the left foot portion and the right foot portion to partly deform the rigid platform. For example, the rider can apply torsion to the rigid platform 110 by using his feet to apply pressure toward the leading edge of the upper deck 111 with one foot (e.g., heel pressure on the first foot portion 111a) and apply pressure toward the trailing edge of the upper deck 111 with the other foot (e.g., toe pressure on the second foot portion 111b).

At 1406 the rigid platform is deformed by the first torque. For example, the uneven loading of the upper deck 111 can cause a slight twist to the rigid platform 110 in a first direction (e.g., about the mid-frontal reference plane C).

At 1408, the strain sensor is deformed by the deformation of the rigid platform. For example, the example steering sensor 800 can be affixed to a surface of the rigid platform 110. As the rigid platform 110 twists slightly under the uneven load, the surfaces of the rigid platform away from the mid-frontal reference plane C will stretch (e.g., lengthened, tensioned) slightly and/or compress (e.g., shortened, compression) slightly. The strain gauges 1001a-1001d of the example strain sensor 1000 of the steering sensor 800, which are affixed to these surfaces, will stretch and compress slightly along with the surfaces upon which they are mounted.

At 1410 a first sensor signal is provided by the strain sensor to the controller. The first sensor signal is representative of deformation of the strain sensor based on the first torque. For example, as the strain gauges 1001a-1001d stretch and/or compress, their resistances will vary proportionally. As these resistances vary, when used as the resistors 910a-910d of the example sensor circuit 900 of FIG. 9, the voltage sensed by the voltage sensor 920 will vary as well in a manner that is roughly proportional to the amount of deformation being applied by the rider's uneven (e.g., twisting) application of force to the rigid platform 110. In some embodiments, the first senor signal can be amplified by an amplifier circuit before being provided to other circuitry.

At 1412 a first control signal is determined by the controller, based on the first sensor signal. For example, the example controller 156 can receive a signal output by the voltage sensor 920 (e.g. an amplified signal of the output from voltage sensor 920) that is representative of the torsional forces being applied by the rider. The controller 156 can determine that this signal is representative of tactile input from the rider to command a turn of the two-wheeled vehicle 100.

At 1414, a first electric motor configured to drive the first wheel is actuated based on the first control signal. For example, the controller 156 may cause one of the wheels 101 to be actuated to rotate faster than the other wheel 101, thereby causing the two-wheeled vehicle 100 to perform a differential steering operation in a speed and direction that is proportional to the rider's tactile input (e.g., the slight twist of the rigid platform caused by the rider's uneven loading of the foot portions 111a and/or 111b.

In some implementations, a second torque, opposite the first torque, can be applied to the rigid platform, the rigid platform can be deformed by the second torque, deforming the strain gauge by the deformation of the rigid platform, providing a second sensor signal that is representative of deformation of the strain sensor based on the second torque, by the strain sensor and to the controller, determining by the controller a second control signal that is based on the second sensor signal (e.g. an amplified version of the second sensor signal), and actuating a second electric motor configured to drive the second wheel based on the second control signal. For example, the rider can shift the pressure on his feet to apply a torque in the opposite direction, that can slightly deform the rigid platform 110 and the steering sensor 802 in an opposite twisting direction, causing a change in the steering signal that the controller 156 can use as an indication that the rider wants to turn in the other direction and drive one of the wheels 101 to rotate faster than the other wheel 101 to cause the two-wheeled vehicle 100 to turn.

In some embodiments, the strain sensor can include at least one first strain gauge configured as a first portion of a Wheatstone bridge, the first strain gauge can have a resistance that varies as the strain sensor is deformed along a first primary sensing axis, and the strain sensor can be affixed to the rigid platform such that the first primary sensing axis is oriented at about a 45-degree angle relative to the common longitudinal axis, wherein the first torque can compress or strain the rigid platform along the first primary sensing axis. For example, the steering sensor 800 can include the strain sensor 1000, which is rotated such that one or more of the strain gauges 1001a-1001d are oriented with their axis 1020 or 1022 at about a 45° degree angle to the mid-sagittal reference plane (B). In a more specific example, the strain gauge 1001a has a grid that is oriented parallel to the axis 1022, and the strain gauge 1001a can be affixed to the rigid platform 110 such that the axis 1022 can the grid 1010 are at about a 45° degree angle to the mid-sagittal reference plane (B).

In some embodiments, the strain sensor can include at least one second strain gauge configured as a second portion of the Wheatstone bridge, the second strain gauge can have a resistance that varies as the second strain gauge is deformed along a second primary sensing axis, and the second strain gauge can be affixed to the rigid platform such that the second primary sensing axis is oriented at about a 45° angle relative to the common longitudinal axis and is oriented at a 90° angle (e.g., about 90°, within +/- 5°) relative to the first primary sensing axis, wherein the second torque can compress or strain the rigid platform along the second primary sensing axis. For example, the steering sensor 800 can include the strain sensor 1000, which is rotated such that one or more of the strain gauges 1001a-1001d are oriented with their axis 1020 or 1022 at approximately a 45° degree angle to the mid-sagittal reference plane (B). The strain gauges 1001a-1001b each has a grid that is oriented parallel to the axis 1022, and the strain gauge 1001a can be affixed to the rigid platform 110 such that the axis 1022 can the grid 1010 are at approximately a 45° degree angle to the mid-sagittal reference plane (B).

In some embodiments, the first control signal can be proportional to the first torque, and the first electric motor can be actuated to drive the first wheel at a speed that is proportional to the first torque. For example, the harder the rider applies the twisting force to the rigid platform 110, the more rapidly the controller 156 may drive one of the wheels 101 relative to the other, causing the two-wheeled vehicle 100 to turn more rapidly or in a tighter curve.

While this specification contains many specific implementation details, these should not be construed as limitations on the scope of any invention or of what may be claimed, but rather as descriptions of features that may be specific to particular embodiments of particular inventions. Certain features that are described in this specification in the context of separate embodiments can also be implemented in combination in a single embodiment in part or in whole. Conversely, various features that are described in the context of a single embodiment can also be implemented in multiple embodiments separately or in any suitable subcombination. Moreover, although features may be described herein as acting in certain combinations and/or initially claimed as such, one or more features from a claimed combination can in some cases be excised from the combination, and the claimed combination may be directed to a subcombination or variation of a subcombination. Similarly, while operations may be described in a particular order, this should not be understood as requiring that such operations be performed in the particular order or in sequential order, or that all operations be performed, to achieve desirable results. Particular embodiments of the subject matter have been described. Other embodiments are within the scope of the following claims.

Embodiments

Although the present invention is defined in the attached claims, it should be understood that the present invention can also (alternatively) be defined in accordance with the following embodiments:

1. A two-wheeled electric vehicle, comprising:

first and second wheels that define a common longitudinal axis of rotation;
a rigid platform extending along the common longitudinal axis between the first and second wheels, and comprising an upper deck that defines a left foot portion and a right foot portion;
a first strain sensor affixed to the rigid platform, the first strain sensor intersected by a mid-sagittal reference plane that divides the rigid platform into left and right halves; and
a control system configured to output a steering control signal based on a sensor signal received from the first strain sensor.

2. The vehicle of embodiment 1, wherein the first strain sensor comprises a bridge circuit including a first strain gauge configured to deform along a primary sensing axis oriented at a 45° angle relative to the common longitudinal axis, the output of the bridge circuit configured to vary as the first strain gauge is deformed.

3. The vehicle of embodiment 2, wherein the first strain gauge is configured to change resistance when deformed along the primary sensing axis.

4. The vehicle of embodiment 2, wherein the first strain sensor comprises a second strain gauge, and the first strain sensor is configured as a one-half Wheatstone bridge circuit.

5. The vehicle of embodiment 2, wherein the first strain sensor comprises first, second, third, and fourth strain gauges, and the first strain sensor is configured as a full Wheatstone bridge circuit.

6. The vehicle of embodiment 1, further comprising a second strain sensor affixed to the rigid platform, the second strain sensor intersected by the mid-sagittal reference plane, wherein the control system is further configured to output a rider detection signal based on a sensor signal received from the second strain sensor.

7. The vehicle of embodiment 6, wherein the control system is further configured to output the steering control signal based on the control signal and the rider detection signal.

8. The vehicle of embodiment 6, wherein the second strain sensor is oriented 45° relative to the first strain sensor.

9. The vehicle of embodiment 2, comprising an offset generator circuit having a variable resistor in electrical communication with the bridge circuit, the offset generator circuit configured to modify the output of the bridge circuit.

10. The vehicle of embodiment 9, wherein the offset generator circuit is configured to add a predetermined positive value to the output of the bridge circuit such that the output of the bridge circuit is the predetermined positive value when no strain is detected by the first strain sensor.

11. The vehicle of embodiment 1, wherein the first strain sensor is affixed to the rigid platform such that torsion of the rigid platform causes the sensor signal to vary in response to torsion of the rigid platform.

12. The vehicle of embodiment 1, wherein the first strain sensor is the only sensor configured to detect a left or right steering input from the user.

13. The vehicle of embodiment 1, wherein the upper deck is a unitary upper deck such that the left foot portion is non-pivotable relative to the right foot portion.

14. A method of propulsion comprising:

detecting a first torque applied to a rigid platform of a two-wheeled vehicle by a first strain sensor affixed to the rigid platform, the two-wheeled vehicle comprising:

first and second wheels that define a common longitudinal axis of rotation; and
a control system;
wherein the first strain sensor is intersected by a mid-sagittal reference plane that divides the rigid platform into left and right halves;

receiving a first sensor signal from the first strain sensor by the control system, the first sensor signal representative of deformation of the strain sensor based on the first torque;
determining by the control system a steering control signal based on the first sensor signal; and
actuating a first electric motor configured to drive the first wheel based on the steering control signal.

15. The method of embodiment 14, wherein the first strain sensor comprises a first strain gauge configured as a first portion of a Wheatstone bridge, a resistance of the first strain gauge configured to vary when the first strain gauge is deformed along a first primary sensing axis.

16. The method of embodiment 15, wherein the first strain sensor is affixed to the rigid platform such that the first primary sensing axis is oriented at a 45° angle relative to the common longitudinal axis, wherein the first torque compresses or strains the rigid platform along the first primary sensing axis.

17. The method of embodiment 16, wherein the strain sensor comprises a second strain gauge configured as a second portion of the Wheatstone bridge, a resistance of the second strain gauge configured to vary when the second strain gauge is deformed along a second primary sensing axis, the second primary sensing axis oriented at a 90° angle relative to the first primary sensing axis.

18. The method of embodiment 14, wherein the first control signal is proportional to the first torque, and the first electric motor is actuated to drive the first wheel at a speed that is proportional to the first torque.

19. The method of embodiment 14, wherein detecting a first torque comprises detecting a twisting of a left foot portion the rigid platform relative to a right foot portion of the rigid platform.

20. A two-wheeled electric vehicle, comprising:

a rigid platform having a major upper surface defining first and second foot portions;
a steering sensor comprising a first strain gauge affixed to the rigid platform; and
a rider detection sensor comprising a second strain gauge affixed to the rigid platform;
wherein the steering sensor and the rider detection sensor are intersected by a mid-sagittal reference plane that divides the rigid platform into left and right halves.

**Claims**

1. A two-wheeled electric vehicle (100), comprising:

first and second wheels (101) that define a common longitudinal axis of rotation;
a rigid platform (110) extending along the common longitudinal axis between the first and second wheels, and comprising an upper deck (111) that defines a left foot portion (111a) and a right foot portion (111b);
a first strain sensor affixed to the rigid platform, the first strain sensor intersected by a mid-sagittal reference plane that divides the rigid platform into left and right halves; and
a control system configured to output a steering control signal based on a sensor signal received from the first strain sensor.

2. The vehicle of claim 1, wherein the first strain sensor comprises a bridge circuit including a first strain gauge configured to deform along a primary sensing axis oriented at a 45° angle relative to the common longitudinal axis, the output of the bridge circuit configured to vary as the first strain gauge is deformed.

3. The vehicle of claim 2, wherein the first strain gauge is configured to change resistance when deformed along the primary sensing axis.

4. The vehicle of claim 2, wherein the first strain sensor comprises a second strain gauge, and the first strain sensor is configured as a one-half Wheatstone bridge circuit, or wherein the first strain sensor comprises first, second, third, and fourth strain gauges, and the first strain sensor is configured as a full Wheatstone bridge circuit.

5. The vehicle of claim 1, further comprising a second strain sensor affixed to the rigid platform, the second strain sensor intersected by the mid-sagittal reference plane, wherein the control system is further configured to output a rider detection signal based on a sensor signal received from the second strain sensor.

6. The vehicle of claim 5, wherein the control system is further configured to output the steering control signal based on the control signal and the rider detection signal.

7. The vehicle of claim 5, wherein the second strain sensor is oriented 45° relative to the first strain sensor.

8. The vehicle of claim 2, comprising an offset generator circuit having a variable resistor in electrical communication with the bridge circuit, the offset generator circuit configured to modify the output of the bridge circuit, and optionally wherein the offset generator circuit is configured to add a predetermined positive value to the output of the bridge circuit such that the output of the bridge circuit is the predetermined positive value when no strain is detected by the first strain sensor.

9. The vehicle of claim 1, wherein the first strain sensor is affixed to the rigid platform such that torsion of the rigid platform causes the sensor signal to vary in response to torsion of the rigid platform, or wherein the first strain sensor is the only sensor configured to detect a left or right steering input from the user.

10. The vehicle of claim 1, wherein the upper deck is a unitary upper deck such that the left foot portion is non-pivotable relative to the right foot portion.

11. A method of propulsion comprising: detecting a first torque applied to a rigid platform of a two-wheeled vehicle by a first strain sensor affixed to the rigid platform, the two-wheeled vehicle comprising:

first and second wheels that define a common longitudinal axis of rotation; and a control system;

wherein the first strain sensor is intersected by a mid-sagittal reference plane that divides the rigid platform into left and right halves; receiving a first sensor signal from the first strain sensor by the control system, the first sensor signal representative of deformation of the strain sensor based on the first torque;

determining by the control system a steering control signal based on the first sensor signal; and actuating a first electric motor configured to drive the first wheel based on the steering control signal.

12. The method of claim 11, wherein the first strain sensor comprises a first strain gauge configured as a first portion of a Wheatstone bridge, a resistance of the first strain gauge configured to vary when the first strain gauge is deformed along a first primary sensing axis.

13. The method of claim 12, wherein the first strain sensor is affixed to the rigid platform such that the first primary sensing axis is oriented at a 45° angle relative to the common longitudinal axis, wherein the first torque compresses or strains the rigid platform along the first primary sensing axis, and optionally wherein the strain sensor comprises a second strain gauge configured as a second portion of the Wheatstone bridge, a resistance of the second strain gauge configured to vary when the second strain gauge is deformed along a second primary sensing axis, the second primary sensing axis oriented at a 90° angle relative to the first primary sensing axis.

14. The method of claim 11, wherein the first control signal is proportional to the first torque, and the first electric motor is actuated to drive the first wheel at a speed that is proportional to the first torque.

15. The method of claim 11, wherein detecting a first torque comprises detecting a twisting of a left foot portion the rigid platform relative to a right foot portion of the rigid platform.

**FIG. 1**

EP 3 407 047 A1

100

120   120
101   101

110

104  171  104

**FIG. 2**

FIG. 3

FIG. 4

EP 3 407 047 A1

FIG. 5

FIG. 6

FIG. 7

FIG. 8

FIG. 9

FIG. 10

**FIG. 11**

FIG. 12

**FIG. 13**

*1400*

```
┌─────────────────────┐
│   Provide Two-      │
│  Wheeled Vehicle    │
│        1402         │
└─────────────────────┘
           │
           ▼
┌─────────────────────┐
│   Apply Torque to   │
│   Rigid Platform    │
│        1404         │
└─────────────────────┘
           │
           ▼
┌─────────────────────┐
│    Deform Rigid     │
│      Platform       │
│        1406         │
└─────────────────────┘
           │
           ▼
┌─────────────────────┐
│   Deform Strain     │
│       Gauge         │
│        1408         │
└─────────────────────┘
           │
           ▼
┌─────────────────────┐
│   Provide Sensor    │
│      Signal         │
│        1410         │
└─────────────────────┘
           │
           ▼
┌─────────────────────┐
│ Determine Control   │
│      Signal         │
│        1412         │
└─────────────────────┘
           │
           ▼
┌─────────────────────┐
│  Actuate Electric   │
│       Motor         │
│        1414         │
└─────────────────────┘
```

**FIG. 14**

Europäisches
Patentamt

European
Patent Office

Office européen
des brevets

## EUROPEAN SEARCH REPORT

Application Number

EP 18 17 3077

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/106931 A1 (WOOD DANIEL J [US]) 20 April 2017 (2017-04-20) * abstract; figures 1-5 * * paragraphs [0035], [0036], [0042], [0048] - [0054], [0061], [0101] * ----- | 1-15 | INV. G01L5/22 B62K23/08 G01G3/14 G01L1/22 G05D1/08 B62K11/00 |

TECHNICAL FIELDS
SEARCHED      (IPC)

G01L
B62K
G01G
G05D

The present search report has been drawn up for all claims

| Place of search | Date of completion of the search | Examiner |
|---|---|---|
| The Hague | 10 October 2018 | Nelva-Pasqual, F |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
........................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 18 17 3077

This annex lists the patent family members relating to the patent documents cited in the above-mentioned European search report.
The members are as contained in the European Patent Office EDP file on
The European Patent Office is in no way liable for these particulars which are merely given for the purpose of information.

10-10-2018

| Patent document cited in search report | | Publication date | Patent family member(s) | | Publication date |
|---|---|---|---|---|---|
| US 2017106931 | A1 | 20-04-2017 | CN | 106585805 A | 26-04-2017 |
| | | | CN | 206528561 U | 29-09-2017 |
| | | | US | 2017106931 A1 | 20-04-2017 |
| | | | US | 2017349231 A1 | 07-12-2017 |
| | | | WO | 2017066794 A1 | 20-04-2017 |

EPO FORM P0459

For more details about this annex : see Official Journal of the European Patent Office, No. 12/82